(19) Europäisches Patentamt
European Patent Office
Office européen des brevets

(11) EP 4 112 658 A1

(12) **EUROPEAN PATENT APPLICATION**
published in accordance with Art. 153(4) EPC

(43) Date of publication:
**04.01.2023 Bulletin 2023/01**

(21) Application number: **21892213.6**

(22) Date of filing: **01.11.2021**

(51) International Patent Classification (IPC):
***C08F 36/04*** *(2006.01)* ***C08F 236/10*** *(2006.01)*
***C08F 8/42*** *(2006.01)* ***C08F 8/32*** *(2006.01)*
***C08L 9/06*** *(2006.01)* ***C08L 15/00*** *(2006.01)*

(52) Cooperative Patent Classification (CPC):
**C08F 8/32; C08F 8/42; C08F 36/04; C08F 236/10; C08L 9/06; C08L 15/00**

(86) International application number:
**PCT/KR2021/015618**

(87) International publication number:
**WO 2022/103043 (19.05.2022 Gazette 2022/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.11.2020 KR 20200153156**
**16.07.2021 KR 20210093678**

(71) Applicant: **Lg Chem, Ltd.**
**Seoul 07336 (KR)**

(72) Inventors:
- **OH, Kyoung Hwan**
  **Daejeon 34122 (KR)**
- **SEO, You Seok**
  **Daejeon 34122 (KR)**
- **LEE, He Seung**
  **Daejeon 34122 (KR)**
- **BAEK, Geun Seung**
  **Daejeon 34122 (KR)**
- **JUN, Jae Moon**
  **Daejeon 34122 (KR)**

(74) Representative: **Goddar, Heinz J.**
**Boehmert & Boehmert Anwaltspartnerschaft mbB**
**Pettenkoferstrasse 22**
**80336 München (DE)**

# (54) DIELECTRIC CONJUGATED DIENE-BASED POLYMER, AND RUBBER COMPOSITION COMPRISING SAME

(57) The present invention relates to an oil-extended conjugated diene-based polymer or an oil-extended modified conjugated diene-based polymer, which has excellent wet skid resistance and abrasion resistance in a balanced way, and a rubber composition including the same, and by controlling the microstructure of the polymer such that a full width at half maximum (FWHM) value of a tan δ peak shown in a temperature range of -100°C to 100°C becomes 20°C or higher in a tan δ graph in accordance with temperature, derived from dynamic viscoelasticity analysis by an Advanced Rheometric Expansion System (ARES), and by including a vegetable oil in a polymer, excellent viscoelasticity behavior properties may be shown, and accordingly, the improvement of overall physical properties may be expected.

[FIG. 1]

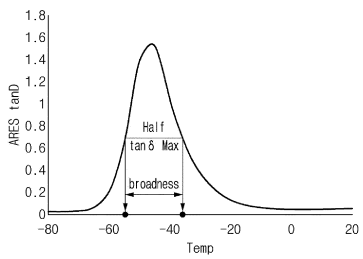


EP 4 112 658 A1

## Description

## TECHNICAL FIELD

### [Cross-reference to Related Applications]

The present application claims the benefit of priority based on Korean Patent Application Nos. 10-2020-0153156, filed on November 16, 2020 and 10-2021-0093678, filed on July 16, 2021, the entire contents of which are incorporated herein by reference.

### [Technical Field]

The present invention relates to an oil-extended conjugated diene-based polymer which has excellent tensile properties, running resistance and processability in a balanced way and improved abrasion resistance and wet skid resistance, and a rubber composition comprising the same.

## BACKGROUND ART

According to the recent demand for cars having a low fuel consumption ratio, a conjugated diene-based polymer having modulational stability represented by wet skid resistance as well as low running resistance, and excellent abrasion resistance and tensile properties is required as a rubber material for tires.

In order to reduce the running resistance of tires, there is a method of reducing hysteresis loss of vulcanized rubber, and rebound resilience at 50°C to 80°C, tan $\delta$, Goodrich heating, or the like is used as an evaluation index of the vulcanized rubber. That is, it is desirable to use a rubber material having high rebound resilience at the above temperature or a low tan $\delta$, Goodrich heating.

Natural rubbers, polyisoprene rubbers, or polybutadiene rubbers are known as rubber materials having low hysteresis loss, but these rubbers have a limitation of low wet skid resistance. Thus, recently, conjugated diene-based polymers or copolymers such as styrene-butadiene rubbers (hereinafter, referred to as "SBR") and butadiene rubbers (hereinafter, referred to as "BR"), are prepared by emulsion polymerization or solution polymerization to be used as rubbers for tires. Among these polymerization methods, the greatest advantage of the solution polymerization in comparison to the emulsion polymerization is that the vinyl structure content and the styrene content, which specify physical properties of the rubber, may be arbitrarily adjusted and its molecular weight and physical properties may be controlled by coupling or modification. Thus, the SBR prepared by the solution polymerization is widely used as a rubber material for tires because it is easy to change a structure of the finally prepared SBR or BR, and movement of chain terminals may be reduced and a coupling force with a filler such as silica and carbon black may be increased by coupling or modification of the chain terminals.

The solution-polymerized SBR is prepared by using an anionic polymerization initiator and is being used by coupling or modifying the chain terminals of the polymer thus formed using various modifiers. For example, U.S. Patent No. 4,397,994 discloses a method of coupling active anions of the chain terminals of a polymer obtained by polymerizing styrene-butadiene using alkyllithium which is a monofunctional initiator in a non-polar solvent, and using a coupling agent such as a tin compound.

In addition, if the solution-polymerized SBR is used as a rubber material, physical properties required for tires such as running resistance may be controlled by increasing the vinyl content in the SBR, but if the vinyl content is high, braking performance and abrasion resistance tend to become unfavorable, and accordingly, the styrene content in the SBR is required to a certain level or higher, but in this case, effects expressed by the high vinyl content may not be shown.

Due to such problems, attempts for improving running resistance and wet skid resistance in a balanced way have been made using block copolymer SBR including two block copolymer units which have styrene and vinyl content gradients by using the solution-polymerized SBR, but the improvement was just insignificant, and in the case of applying SBR having a low glass transition temperature to improve abrasion resistance, wet skid resistance tends to get worse.

Accordingly, it is necessary to develop a polymer that may improve wet skid resistance and abrasion resistance simultaneously, in a state basically satisfying the required performance of products on tensile properties and fuel consumption properties.

[Prior Art Document]

(Patent Document 1) US 4,397,994 A (1983. 08. 09.)

## DISCLOSURE OF THE INVENTION

## TECHNICAL PROBLEM

The present invention has been devised to solve the above-mentioned problems of the related arts, and an object is to provide an oil-extended conjugated diene-based polymer having a specific viscoelasticity tan δ peak through controlling the microstructure of the polymer to accomplish tires having improved properties of wet skid resistance and abrasion resistance in a balanced way in a state of maintaining excellent tensile properties and running resistance (fuel consumption properties), and including a vegetable oil.

In addition, another object of the present invention is to provide an oil-extended modified conjugated diene-based polymer having improved abrasion resistance and wet skid resistance through controlling the microstructure of the polymer itself, and additionally having even further improved running resistance and processability through introducing a modifier.

In addition, another object of the present invention is to provide a rubber composition including the conjugated diene-based polymer and/or modified conjugated diene-based polymer.

## TECHNICAL SOLUTION

To solve the above-described tasks, according to an embodiment of the present invention, there is provided an oil-extended conjugated diene-based polymer comprising: a polymer unit comprising a repeating unit derived from a conjugated diene-based monomer; and a vegetable oil, wherein, in a tan δ graph in accordance with temperature, derived from dynamic viscoelasticity analysis by an Advanced Rheometric Expansion System (ARES), a full width at half maximum (FWHM) value of a tan δ peak shown in a temperature range of -100°C to 100°C is 20°C or higher, and the Advanced Rheometric Expansion System is measured using a dynamic mechanical analyzer with a torsional mode under conditions of a frequency of 10 Hz, a strain of 0.5%, and a temperature rise rate of 5°C/min.

In addition, the present invention provides an oil-extended modified conjugated diene-based polymer comprising: a modified polymer unit comprising a repeating unit derived from a conjugated diene-based monomer, and a functional group derived from a modifier; and a vegetable oil, wherein, in a tan δ graph in accordance with temperature, derived from dynamic viscoelasticity analysis by an Advanced Rheometric Expansion System (ARES), a full width at half maximum (FWHM) value of a tan δ peak shown in a temperature range of -100°C to 100°C is 20°C or higher, and the Advanced Rheometric Expansion System is measured using a dynamic mechanical analyzer with a torsional mode under conditions of a frequency of 10 Hz, a strain of 0.5%, and a temperature rise rate of 5°C/min.

In addition, the present invention provides a rubber composition comprising a polymer and a filler, wherein the polymer is an oil-extended conjugated diene-based polymer or an oil-extended modified conjugated diene-based polymer.

Also, the present invention provides a rubber composition comprising a conjugated diene-based polymer and a filler, wherein, in a tan δ graph in accordance with temperature, derived from dynamic viscoelasticity analysis by an Advanced Rheometric Expansion System (ARES), a full width at half maximum (FWHM) value of a tan δ peak shown in a temperature range of -100°C to 100°C is 31°C or higher, the Advanced Rheometric Expansion System is measured using a dynamic mechanical analyzer with a torsional mode under conditions of a frequency of 10 Hz, a strain of 0.5%, and a temperature rise rate of 5°C/min, and the conjugated diene-based polymer comprises a vegetable oil.

## ADVANTAGEOUS EFFECTS

The oil-extended conjugated diene-based polymer according to the present invention may show excellent tensile properties and running resistance, and at the same time, may show effects of markedly improving wet skid resistance and abrasion resistance by controlling the microstructure of the polymer, and may also show excellent processability by including a vegetable oil.

In addition, since the conjugated diene-based polymer according to the present invention may achieve excellent abrasion resistance and wet skid resistance through controlling the microstructure, may achieve excellent processability through including the vegetable oil, and may further achieve excellent running resistance (fuel consumption properties) and tensile properties through introducing a modifier.

## BRIEF DESCRIPTION OF THE DRAWINGS

The accompanying drawings in the present disclosure illustrate particular embodiments of the present invention and are included together with the above description to provide a further understanding of the inventive concept. The inventive concept, however, should not be construed as limited to the accompanying drawings.

FIG. 1 is an embodiment of a tan δ graph in accordance with temperature, derived from dynamic viscoelasticity analysis by an Advanced Rheometric Expansion System (ARES).

## BEST MODE FOR CARRYING OUT THE INVENTION

Hereinafter, the present invention will be described in more detail in order to assist the understanding of the present invention.

It will be understood that words or terms used in the description and claims of the present invention shall not be interpreted as the meaning defined in commonly used dictionaries. It will be further understood that the words or terms should be interpreted as having a meaning that is consistent with their meaning of the technical idea of the invention, based on the principle that an inventor may properly define the meaning of the words or terms to best explain the invention.

### Definition of terms

In the present disclosure, the term "polymer" refers to a polymer compound prepared by polymerizing monomers, irrespective of the same or different types. Like this, a general term polymer covers the term homopolymer which is generally used to refer to a polymer prepared from one type of a monomer, and the term copolymer which is regulated below.

In the present disclosure, the term "1,2-vinyl bond content" refers to the mass(or weight) percent of butadiene contained at 1,2-positions in a polymer chain of a polymer based on the portion derived from a conjugated diene-based monomer (butadiene, etc.) (the total amount of polymerized butadiene) in a polymer.

In the present disclosure, the term "styrene bond content" refers to the mass (or weight) percent of styrene contained in a polymer chain of a polymer derived from an aromatic vinyl-based monomer (styrene, etc.) in a polymer.

In the present disclosure, the term "room temperature" means a temperature in a natural state without heating or cooling, and is a temperature of 20±5°C.

In the present disclosure, the term "substituted" may mean that hydrogen of a functional group, an atomic group or a compound is substituted with a specific substituent, and if the hydrogen of a functional group, an atomic group or a compound is substituted with a specific substituent, one or a plurality including two or more substituents may be present according to the number of hydrogen present in the functional group, the atomic group or the compound, and if there are a plurality of substituents, each substituent may be the same or different.

In the present disclosure, the term "alkyl group" may mean monovalent aliphatic saturated hydrocarbon, and may include a linear alkyl group such as methyl, ethyl, propyl and butyl; a branched alkyl group such as isopropyl, sec-butyl, tert-butyl and neo-pentyl; and cyclic saturated hydrocarbon, or cyclic unsaturated hydrocarbon including one or two or more unsaturated bonds.

In the present disclosure, the term "alkylene group" may mean divalent aliphatic saturated hydrocarbon such as methylene, ethylene, propylene and butylene.

In the present invention, the term "cycloalkyl group" may mean cyclic saturated hydrocarbon.

In the present disclosure, the term "aryl group" may mean aromatic hydrocarbon, and may include both monocyclic aromatic hydrocarbon in which one ring is formed, and polycyclic aromatic hydrocarbon in which two or more rings are bonded.

In the present disclosure, the term "aralkyl group" is also referred to as aralkyl and may mean the combination of an alkyl group and an aryl group, formed by substituting a hydrogen atom bonded to carbon constituting an alkyl group with an aryl group.

In the present disclosure, the term "single bond" may mean a single covalent bond itself excluding a separate atomic or molecular group.

In the present disclosure, the terms "derived unit", "derived repeating unit" and "derived functional group" may mean a component or a structure comes from a certain material, or the material itself.

In the present disclosure, the term "polymer unit" refers to a polymer chain formed by polymerizing one type of a monomer or a multiple types of monomers.

In the present disclosure, the term "modified polymer unit" refers to a modified polymer chain further including a functional group derived from a modifier in a polymer chain formed by polymerizing one type of a monomer or a multiple types of monomers.

In the present disclosure, the terms "comprising", and "having" and the derivatives thereof, though these terms are particularly disclosed or not, do not intended to preclude the presence of optional additional components, steps, or processes. In order to avoid any uncertainty, all compositions claimed by using the term "comprising" may include optional additional additives, auxiliaries, or compounds, including a polymer or any other materials, unless otherwise described to the contrary. In contrast, the term "consisting essentially of ~" excludes unnecessary ones for operation and precludes optional other components, steps or processes from the scope of optional continuous description. The

term "consisting of ~" precludes optional components, steps or processes, which are not particularly described or illustrated.

## Measurement methods and conditions

In the present disclosure, the "1,2-vinyl bond content" and "styrene bond content" are the vinyl content and the styrene content in a polymer unit, measured and analyzed using Varian VNMRS 500 MHz NMR. For the NMR measurement, 1,1,2,2-tetrachloroethane was used as a solvent, 6.0 ppm was calculated as a solvent peak, and the 1,2-vinyl content and the styrene bond content in total polymer were respectively calculated and measured considering the peaks of 7.2-6.9 ppm as random styrene, 6.9-6.2 ppm as block styrene, 5.8-5.1 ppm as 1,4-vinyl and 1,2-vinyl, and 5.1-4.5 ppm as 1,2-vinyl.

In the present disclosure, a "weight average molecular weight (Mw), "molecular weight distribution (MWD)" and "unimodal properties" were obtained by measuring a weight average molecular weight (Mw) and a number average molecular weight (Mn) by gel permeation chromatograph (GPC) (PL GPC220, Agilent Technologies), obtaining a molecular weight distribution curve, and calculating molecular weight distribution (PDI, MWD, Mw/Mn) from each of the molecular weights measured.

- Column: using two of PLgel Olexis (Polymer Laboratories Co.) and one of PLgel mixed-C (Polymer Laboratories Co.) in combination
- Solvent: using a mixture of tetrahydrofuran and 2 wt% of an amine compound
- Flow rate: 1 ml/min
- Specimen concentration: 1-2 mg/ml (diluted in THF)
- Injection amount: 100 μl
- Column temperature: 40°C
- Detector: Refractive index
- Standard: Polystyrene (calibrated by cubic function)

In the present disclosure, "glass transition temperature (Tg)" is obtained based on ISO 22768:2006 using a differential scanning calorimetry (DSCQ100, TA Co.). Under the circulation of nitrogen in a rate of 50 ml/min, a differential scanning calorimetry (DSC) curve is recorded while elevating the temperature from -100°C in a rate of 10°C/min, and the peak top (inflection point) of the DSC differential curve is regarded as the glass transition temperature.

In the present disclosure, a "tan δ peak" is a peak shown in a tan δ graph in accordance with temperature, derived from dynamic viscoelasticity analysis by an Advanced Rheometric Expansion System (ARES), and is measured using a dynamic mechanical analyzer (TA Co., ARES-G2) with a torsional mode under conditions of a frequency of 10 Hz, a strain of 0.5%, a temperature rise rate of 5°C/min.

In the present disclosure, the "Si content" was measured by an ICP analysis method using an inductively coupled plasma optical emission spectroscopy (ICP-OES; Optima 7300DV), and by using the inductively coupled plasma optical emission spectroscopy, measurement was performed by adding about 0.7 g of a specimen to a platinum (Pt) crucible, adding about 1 mL of concentrated sulfuric acid (98 wt%, electronic grade) thereto, heating at 300°C for 3 hours, incinerating the specimen in an electrical furnace (Thermo Scientific, Lindberg Blue M) by the following program of steps 1 to 3:

1) step 1: initial temp 0°C, rate (temp/hr) 180°C/hr, temp (holdtime) 180°C (1hr),
2) step 2: initial temp 180°C, rate (temp/hr) 85°C/hr, temp (holdtime) 370°C (2hr), and
3) step 3: initial temp 370°C, rate (temp/hr) 47°C/hr, temp (holdtime) 510°C (3hr),

adding 1 mL of concentrated nitric acid (48 wt%) and 20 μl of concentrated hydrofluoric acid (50 wt%) to a residue, sealing the platinum crucible and shaking for 30 minutes or more, adding 1 mL of boric acid to the specimen, storing at 0°C for 2 hours or more, diluting in 30 ml ultrapure water, and performing incineration.

In the present disclosure, the "N content" may be measured through an NSX analysis method, and measurement by the NSX analysis method may use a quantitative analyzer of a trace amount of nitrogen (NSX-2100H). Particularly, the quantitative analyzer of a trace amount of nitrogen (Auto sampler, Horizontal furnace, PMT & Nitrogen detector) was turned on, carrier gas flow amounts were set to 250 ml/min for Ar, 350 ml/min for $O_2$, and 300 ml/min for ozonizer, a heater was set to 800°C, and the analyzer was stood for about 3 hours for stabilization. After stabilizing the analyzer, a calibration curve with calibration curve ranges of 5 ppm, 10 ppm, 50 ppm, 100 ppm and 500 ppm was made using Nitrogen standard (AccuStandard S-22750-01-5 ml), an area corresponding to each concentration was obtained, and then, by using the ratios of concentrations to areas, a straight line was made. After that, a ceramic boat holding 20 mg of a specimen was put in the auto sampler of the analyzer and measurement was conducted to obtain an area. By using

the area of the specimen thus obtained and the calibration curve, the N content was calculated.

In this case, the specimen used in the NSX analysis method may be a modified conjugated diene-based polymer from which solvents are removed by putting the specimen in hot water heated by steam and stirring, and may be a specimen from which remaining monomer and remaining modifier are removed. In addition, if oil was added to the specimen, the specimen may be one from which oil was extracted (removed).

## Oil-extended conjugated diene-based polymer

The present invention provides an oil-extended conjugated diene-based polymer having a specific viscoelasticity tan δ peak through controlling a microstructure to accomplish tires having improved properties of wet skid resistance and abrasion resistance in a balanced way in a state of maintaining excellent tensile properties and running resistance (fuel consumption properties) and improved processability, and including a vegetable oil.

The oil-extended conjugated diene-based polymer according to the present invention is characterized in including a polymer unit including a repeating unit derived from a conjugated diene-based monomer; and a vegetable oil, wherein, in a tan δ graph in accordance with temperature, derived from dynamic viscoelasticity analysis by an Advanced Rheometric Expansion System (ARES), a full width at half maximum (FWHM) value of a tan δ peak shown in a temperature range of -100°C to 100°C is 20°C or higher, and the Advanced Rheometric Expansion System is measured using a dynamic mechanical analyzer with a torsional mode under conditions of a frequency of 10 Hz, a strain of 0.5%, and a temperature rise rate of 5°C/min.

According to an embodiment of the present invention, since the oil-extended conjugated diene-based polymer achieved a polymer having a specific microstructure through the application of a specific preparation method, which will be explained later, the dynamic viscoelasticity behavior of the polymer may be controlled to have a specific tan δ peak, and through this, tensile properties and running resistance may become excellent, and wet skid resistance and abrasion resistance may be improved.

In addition, according to an embodiment of the present invention, the conjugated diene-based polymer includes a vegetable oil through applying a preparation method which will be explained later, and effects of having excellent properties and improved processability may be achieved.

### *Dynamic viscoelasticity behavior of polymer*

According to an embodiment of the present invention, the conjugated diene-based polymer is characterized in having a full width at half maximum (FWHM) value of a tan δ peak shown in a temperature range of -100°C to 100°C of 20°C or higher, in a tan δ graph in accordance with temperature, derived from dynamic viscoelasticity analysis by an Advanced Rheometric Expansion System (ARES).

In the case of a polymer which is prepared by a general polymerization method and the microstructure thereof is not controlled, two or more tan δ peaks are shown, or the width of a peak is formed very narrow, and the width of a peak formed is not broad. This may be related to the glass transition temperature, and in the case where units are partitioned in a polymer as in a block copolymer, and there is a large glass transition temperature difference between the blocks, the tan δ peak may have a narrow width and two or more peaks may be shown. In addition, in the case of a random copolymer, if the vinyl content or styrene content in a final polymer is controlled without fine control of the microstructure, the width of a peak is generally shown very narrow.

In this case, the glass transition temperature may be the same for both the block copolymer and the random copolymer, but there is a large difference in wet skid resistance, and to solve such defects, there have been efforts to improve the wet skid resistance enduring the change of the glass transition temperature. However, if the glass transition temperature changes, there are problems in that abrasion resistance changes, and basic physical properties of the polymer change, and the task of achieving a polymer having improved performance is still present. That is, the adjustment of balance between abrasion resistance and wet skid resistance is difficult and remains as a difficult task to solve considering that these two properties are hard to improve through a modification process. However, the conjugated diene-based polymer according to an embodiment of the present invention is prepared by a preparation method controlling the microstructure of the polymer, and though having the same glass transition temperature as that of the conventional modified conjugated diene-based polymer, a specific tan δ peak may be shown, and improving effects of the wet skid resistance and abrasion resistance simultaneously, may be achieved.

In this case, the tan δ peak is characterized in being shown in a temperature range of -100°C to 100°C, and the full width at half maximum of the tan δ peak is 20°C or higher, in a tan δ graph in accordance with temperature, derived from dynamic viscoelasticity analysis by an Advanced Rheometric Expansion System (ARES). The number of the tan δ peaks shown in the temperature range may be commonly one, or two or more, and in the case of showing two or more peaks, it may mean that the full width at half maximum of one peak among multiple peaks is 20°C or higher.

The full width at half maximum value of the tan δ peak may be 20°C or higher, preferably, 30°C or higher. In

addition, the full width at half maximum value may be 80°C to the maximum, preferably, 70°C or less. In another embodiment, the full width at half maximum value of the tan δ peak may be 30°C to 80°C, or 35°C to 60°C. If the full width at half maximum is less than 20°C, there arise defects of markedly reducing wet skid resistance at the same glass transition temperature, and it is unlikely to achieve a case where the full width at half maximum of the peak is greater than 80°C, and though achieved, phase separation may occur, defects of increasing hysteresis at a high temperature may be inevitably accompanied, and there may arise defects of degrading fuel consumption properties.

In addition, the tan δ peak may be shown at -100°C to 100°C, preferably, -80°C to 20°C, more preferably, -70°C to 0°C. If the peak is shown within the range, more favorable effects of abrasion resistance may be expected.

Dynamic viscoelasticity analysis by the Advanced Rheometric Expansion System corresponds to measuring tan δ in accordance with temperature in a temperature range of -100°C to 100°C using a dynamic mechanical analyzer (TA Co., ARES-G2) with a torsional mode under a frequency of 10 Hz, a strain of 0.5%, and a temperature rise rate of 5°C/min, and in this case, a graph derived is a tan δ value in accordance with temperature.

*Vegetable oil*

According to an embodiment of the present invention, the conjugated diene-based polymer may be an oil-extended polymer including a polymer unit including a repeating unit derived from a conjugated diene-based monomer; and a vegetable oil.

Generally, oil-extended rubber is rubber prepared by mixing synthetic rubber with petroleum-based oil to improve the flexibility, elasticity and compounding properties of synthetic rubber such as a conjugated diene-based polymer. The conjugated diene-based polymer according to the present invention is prepared using a vegetable oil derived from plants which are eco-friendly materials, and includes the vegetable oil in the polymer, and accordingly, eco-friendliness and improved flexibility, elasticity and compounding properties may be expected.

Meanwhile, in the present invention, the "vegetable oil" is an oil component derived, i.e., extracted from plants, and is generally a triglyceride molecule represented by Formula 14 below.

[Formula 14]

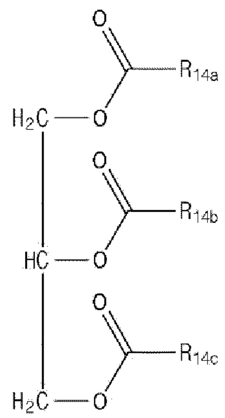

In Formula 14, each of $R_{14a}$ to $R_{14c}$ is the radical of an ester derived from a fatty acid, and is an unsaturated or saturated hydrocarbon group.

Here, the relative ratio of $R_{14a}$ to $R_{14c}$ may be different according to the type of the vegetable oil, for example, as follows shown in Table 1 below.

[Table 1]

| Vegetable oil | Saturated (wt%, $R_{14a}$) | Monounsaturated (wt%, $R_{14b}$) | Polyunsaturated (wt%, $R_{14c}$) |
|---|---|---|---|
| Soybean oil | 17 | 23 | 60 |
| Sunflower oil | 10 | 45 | 40 |
| Canola oil | 7 | 63 | 28 |
| Linseed oil | 10 | 45 | 40 |
| Olive oil | 14 | 73 | 11 |

(continued)

| Vegetable oil | Saturated (wt%, $R_{14a}$) | Monounsaturated (wt%, $R_{14b}$) | Polyunsaturated (wt%, $R_{14c}$) |
|---|---|---|---|
| Peanut oil | 17 | 46 | 32 |
| Cottonseed oil | 26 | 18 | 52 |
| Oil palm oil | 49 | 37 | 9 |
| Olive oil | 14 | 73 | 11 |

In another embodiment, the vegetable oil may have an iodine value of 70 to 150, particularly, 110 to 140.

In addition, the vegetable oil may have a glass transition temperature of -110°C to -100°C, and within this range, the abrasion resistance of a rubber composition may be improved even more.

In another embodiment, as the vegetable oil, oils derived from plants may be included in the present invention without specific limitation, and particularly, the vegetable oil may be one or more selected from the group consisting of soybean oil, rapeseed oil, canola oil, sunflower oil, linseed oil, rice bran oil, palm oil, olive oil, peanut oil, oil palm oil, cottonseed oil, and coconut oil. More particularly, in respect of achieving the desired effects more favorably, the vegetable oil may be soybean oil.

In addition, the conjugated diene-based polymer may include the vegetable oil in 10 parts by weight to 60 parts by weight, or 20 parts by weight to 37.5 parts by weight based on 100 parts by weight of the polymer unit. In this case, effects of even better flexibility, elasticity and processability of the conjugated diene-based polymer may be achieved.

*Repeating unit derived from monomer*

According to an embodiment of the present invention, the conjugated diene-based polymer includes a polymer unit including a repeating unit derived from a conjugated diene-based monomer, and the conjugated diene-based monomer may be, for example, one or more selected from the group consisting of 1,3-butadiene, 2,3-dimethyl-1,3-butadiene, piperylene, 3-butyl-1,3-octadiene, isoprene, 2-phenyl-1,3-butadiene and 2-halo-1,3-butadiene (halo means a halogen atom).

In addition, the polymer unit additionally includes a repeating unit derived from an aromatic vinyl-based monomer, and the aromatic vinyl-based monomer may be, for example, one or more selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene, 1-vinyl-5-hexylnaphthalene, 3-(2-pyrrolidino ethyl)styrene, 4-(2-pyrrolidino ethyl)styrene and 3-(2-pyrrolidino-1-methyl ethyl)-α-methylstyrene.

In another embodiment, the polymer unit may be a copolymer further including a repeating unit derived from a diene-based monomer of 1 to 10 carbon atoms together with the repeating unit derived from the conjugated diene-based monomer. The repeating unit derived from a diene-based monomer may be a repeating unit derived from a diene-based monomer which is different from the conjugated diene-based monomer, and the diene-based monomer which is different from the conjugated diene-based monomer may be, for example, 1,2-butadiene. If the conjugated diene-based polymer is a copolymer further including a diene-based monomer, the conjugated diene-based polymer may include a repeating unit derived from the diene-based monomer in greater than 0 wt% to 1 wt%, greater than 0 wt% to 0.1 wt%, greater than 0 wt% to 0.01 wt%, or greater than 0 wt% to 0.001 wt%, and within this range, effects of preventing gel formation may be achieved.

According to an embodiment of the present invention, if two or more monomers are included in the polymer unit of the conjugated diene-based polymer, a chain structure of a middle type of a random copolymer and a block copolymer may be formed, and in this case, the control of microstructure may be easy, and excellent effects of balance among physical properties may be achieved. The random copolymer may mean arrangement of repeating units forming the copolymer in disorder.

*Glass transition temperature of polymer*

According to an embodiment of the present invention, the glass transition temperature of the conjugated diene-based polymer may be -100°C to 20°C. The glass transition temperature is a value changing according to the microstructure of the polymer, but in order to improve abrasion resistance, the polymer is preferably prepared to satisfy the range, more preferably, -100°C to 0°C, more preferably, -90°C to -10°C, further more preferably, -80°C to -20°C.

The glass transition temperature may be flexibly controlled by the bonding method of the conjugated diene-based monomer in a polymer unit (1,2-bond or 1,4-bond), the presence or absence of a repeating unit derived from an aromatic vinyl-based monomer, the content of the repeating unit derived from an aromatic vinyl-based monomer, and

the microstructure in each unit (1,2-vinyl bond content and styrene bond content) according to polymerization methods and polymerization conditions.

In addition, the conjugated diene-based polymer may have the 1,2-vinyl bond content of 10 parts by weight to 80 parts by weight, preferably, 20 to 60 parts by weight, more preferably, 20 to 50 parts by weight with respect to 100 parts by weight of the polymer. If the microstructure is controlled like this, the improvement of abrasion resistance and wet skid resistance in a balanced way may be expected, with excellent tensile properties and running resistance.

**Oil-extended modified conjugated diene-based polymer**

According to an embodiment of the present invention, there is provided an oil-extended modified conjugated diene-based polymer including a modified polymer unit including a repeating unit derived from a conjugated diene-based monomer, and a functional group derived from a modifier; and a vegetable oil, wherein, in a tan $\delta$ graph in accordance with temperature, derived from dynamic viscoelasticity analysis by an Advanced Rheometric Expansion System (ARES), a full width at half maximum (FWHM) value of a tan $\delta$ peak shown in a temperature range of -100°C to 100°C is 20°C or higher, and the Advanced Rheometric Expansion System is measured using a dynamic mechanical analyzer with a torsional mode under conditions of a frequency of 10 Hz, a strain of 0.5%, and a temperature rise rate of 5°C/min.

The explanation on the tan $\delta$ peak, the vegetable oil and the derived unit from a monomer have been provided in the aforementioned conjugated diene-based polymer, and the explanation thereon will be omitted.

*Si and N contents of polymer*

Meanwhile, the modified conjugated diene-based polymer according to an embodiment of the present invention may have the Si and N contents of 50 ppm or more, or 50 ppm to 1000 ppm each, based on the total weight of the polymer. The lower limit may preferably be 100 ppm or more, and 150 ppm or more each, and the upper limit may preferably be 700 ppm or less, preferably, 500 ppm or less each. Within these ranges, the mechanical properties such as tensile properties and viscoelasticity properties of a rubber composition including the modified conjugated diene-based polymer may be excellent. Meanwhile, since a compound having a modification functional group such as a modifier which will be explained later, a modification initiator and a modification monomer is introduced, the Si and N may be derived therefrom.

*Alkoxysilane-based modifier*

According to an embodiment of the present invention, the modified conjugated diene-based polymer includes a functional group derived from a modifier, and the modifier is for modifying the terminals of a polymer, and particularly, may be an alkoxysilane-based modifier as a modifier having affinity with silica. The modifier having affinity with silica may mean a modifier containing a functional group having affinity with silica in a compound used as the modifier, and the functional group having affinity with silica may mean a functional group having excellent affinity with a filler, particularly, a silica-based filler, and is capable of making interaction between the silica-based filler and the functional group derived from the modifier.

The modifier may be an alkoxysilane-based modifier, particularly, an alkoxysilane-based modifier containing one or more heteroatoms including a nitrogen atom, an oxygen atom, and a sulfur atom. If the alkoxysilane-based compound is used as a modifier, through substitution reaction between an anionic active part positioned at one terminal of an active polymer and an alkoxy group of the alkoxysilane-based modifier, the one terminal of the active polymer may be modified into a bonding state with a silyl group, and accordingly, the affinity with an inorganic filler of the modified conjugated diene-based polymer may be increased from the functional group derived from the modifier present at the one terminal of the polymer unit, and the viscoelasticity properties of a rubber composition including the modified conjugated diene-based polymer may be improved. Also, if the alkoxysilane-based compound contains a nitrogen atom, additional effects of improving physical properties due to the nitrogen atom may be anticipated in addition to the effects due to the silyl group. In order to embody such effects optimally, a compound including an N-containing functional group is preferably applied.

According to an embodiment of the present invention, the modifier may include a compound represented by Formula 1 below.

[Formula 1]

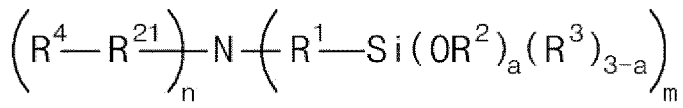

In Formula 1, $R^1$ may be a single bond, or an alkylene group of 1 to 10 carbon atoms, $R^2$ and $R^3$ may be each independently an alkyl group of 1 to 10 carbon atoms, $R^4$ may be hydrogen, an alkyl group of 1 to 10 carbon atoms, a mono-substituted, di-substituted, or tri-substituted alkylsilyl group with an alkyl group of 1 to 10 carbon atoms, or a heterocycle of 2 to 10 carbon atoms, $R^{21}$ may be a single bond, an alkylene group of 1 to 10 carbon atoms, or $-[R^{42}O]_j-$, where $R^{42}$ may be an alkylene group of 1 to 10 carbon atoms, a and m may be each independently an integer selected from 1 to 3, n may be an integer of 0, 1 or 2, and j may be an integer selected from 1 to 30.

In a particular embodiment, in Formula 1, $R^1$ may be a single bond, or an alkylene group of 1 to 5 carbon atoms, $R^2$ and $R^3$ may be each independently hydrogen, or an alkyl group of 1 to 5 carbon atoms, $R^4$ may be hydrogen, an alkyl group of 1 to 5 carbon atoms, a trialkylsilyl group which is substituted with an alkyl group of 1 to 5 carbon atoms, or a heterocyclic group of 2 to 5 carbon atoms, $R^{21}$ may be a single bond, an alkylene group of 1 to 5 carbon atoms, or $-[R^{42}O]_j-$, where $R^{42}$ may be an alkylene group of 1 to 5 carbon atoms, a may be an integer of 2 or 3, m may be an integer selected from 1 to 3, n may be an integer of 0, 1 or 2, where m+n=3 may be satisfied, and j may be an integer selected from 1 to 10.

In Formula 1, if $R^4$ is a heterocyclic group, the heterocyclic group may be unsubstituted or substituted with a trisubstituted alkoxysilyl group, and if the heterocyclic group is substituted with a trisubstituted alkoxysilyl group, the trisubstituted alkoxysilyl group may be substituted via the connection with the heterocyclic group by an alkylene group of 1 to 10 carbon atoms, and the trisubstituted alkoxysilyl group may mean an alkoxysilyl group which is substituted with an alkoxy group of 1 to 10 carbon atoms.

In a more particular embodiment, the compound represented by Formula 1 may be one selected from the group consisting of N,N-bis(3-(dimethoxy(methyl)silyl)propyl)-methyl-1-amine, N,N-bis(3-(diethoxy(methyl)silyl)propyl)-methyl-1-amine, N,N-bis(3-(trimethoxysilyl)propyl)-methyl-1-amine, N,N-bis(3-(triethoxysilyl)propyl)-methyl-1-amine, N,N-diethyl-3-(trimethoxysilyl)propan-1-amine, N,N-diethyl-3-(triethoxysilyl)propan-1-amine, tri(trimethoxysilyl)amine, tri-(3-(trimethoxysilyl)propyl)amine, N,N-bis(3-(diethoxy(methyl)silyl)propyl)-1,1,1-trimethlysilanamine, N,N-bis(3-(1H-imidazol-1-yl)propyl)-(triethoxysilyl)methan-1-amine, N-(3-(1H-1,2,4-triazole-1-yl)propyl)-3-(trimethoxysilyl)-N-(3-(trimethoxysilyl)propyl)propan-1-amine, 3-(trimethoxysilyl)-N-(3-(trimethoxysilyl)propyl)-N-(3-(1-(3-(trimehtoxysilyl)propyl)-1H-1,2,4-triazol-3-yl)propyl)propan-1-amine, N,N-bis(2-(2-methoxyethoxy)ethyl)-3-(triethoxysilyl)propan-1-amine, N,N-bis(3-(triethoxysilyl)propyl)-2,5,8,11,14-pentaoxahexadecan-16-amine, N-(2,5,8,11,14-pentaoxahexadecan-16-yl)-N-(3-(triethoxysilyl)propyl)-2,5,8,11,14-pentaoxahexadecan-16-amine and N-(3,6,9,12-tetraoxahexadecyl)-N-(3-(triethoxysilyl)propyl)-3,6,9,12-tetraoxahexadecan-1-amine.

In another embodiment, the modifier may include a compound represented by Formula 2 below.

[Formula 2]

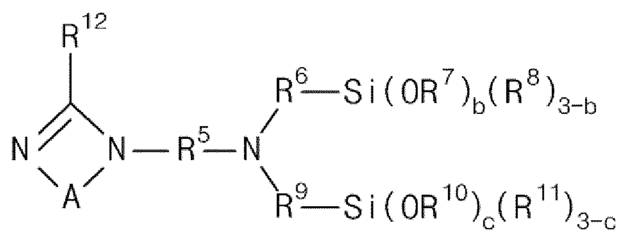

In Formula 2, $R^5$, $R^6$ and $R^9$ may be each independently an alkylene group of 1 to 10 carbon atoms, $R^7$, $R^8$, $R^{10}$ and $R^{11}$ may be each independently an alkyl group of 1 to 10 carbon atoms, $R^{12}$ may be hydrogen or an alkyl group of 1 to 10 carbon atoms, b and c may be each independently 0, 1, 2 or 3, where $b+c\geq 1$ may be satisfied, and A may be

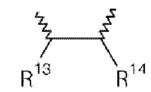 or 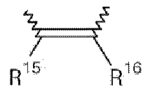,

where $R^{13}$, $R^{14}$, $R^{15}$ and $R^{16}$ may be each independently hydrogen or an alkyl group of 1 to 10 carbon atoms.

In a particular embodiment, the compound represented by Formula 2 may be one selected from the group consisting of N-(3-(1H-imidazol-1-yl)propyl)-3-(triethoxysilyl)-N-(3-(triethoxysilyl)propyl)propan-1-amine and 3-(4,5-dihydro-1H-imidazol-1-yl)-N,N-bis(3-(triethoxysilyl)propyl)propan-1-amine.

In another embodiment, the modifier may include a compound represented by Formula 3 below.

[Formula 3]

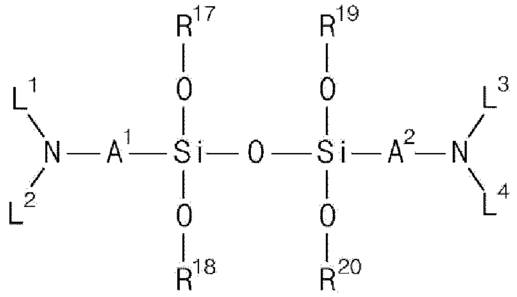

In Formula 3, $A^1$ and $A^2$ may be each independently a divalent hydrocarbon group of 1 to 20 carbon atoms, which contains an oxygen atom or not, $R^{17}$ to $R^{20}$ may be each independently a monovalent hydrocarbon group of 1 to 20 carbon atoms, $L^1$ to $L^4$ may be each independently a mono-substituted, di-substituted, or tri-substituted alkylsilyl group with an alkyl group of 1 to 10 carbon atoms, or a monovalent hydrocarbon group of 1 to 20 carbon atoms, where $L^1$ and $L^2$, and $L^3$ and $L^4$ each may be combined with each other to form rings of 1 to 5 carbon atoms, and if $L^1$ and $L^2$, and $L^3$ and $L^4$ each are combined with each other to form rings, the rings thus formed may include one to three of one or more types of heteroatoms selected from the group consisting of N, O and S.

In a particular embodiment, in Formula 3, $A^1$ and $A^2$ may be each independently an alkylene group of 1 to 10 carbon atoms, $R^{17}$ to $R^{20}$ may be each independently an alkyl group of 1 to 10 carbon atoms, $L^1$ to $L^4$ may be each independently a trialkylsilyl group which is substituted with an alkyl group of 1 to 5 carbon atoms, or an alkyl group of 1 to 10 carbon atoms, where $L^1$ and $L^2$, and $L^3$ and $L^4$ each may be combined with each other to form rings of 1 to 3 carbon atoms, and if $L^1$ and $L^2$, and $L^3$ and $L^4$ each are combined with each other to form rings, the rings thus formed may include one to three of one or more types of heteroatoms selected from the group consisting of N, O and S.

In a more particular embodiment, the compound represented by Formula 3 may be one selected from the group consisting of 3,3'-(1,1,3,3-tetramethoxydisiloxane-1,3-diyl)bis(N,N-dimethylpropan-1-amine), 3,3'-(1,1,3,3-tetraethoxydisiloxane-1,3-diyl)bis(N,N-dimethylpropan-1-amine), 3,3'-(1,1,3,3-tetrapropoxydisiloxane-1,3-diyl)bis(N,N-dimethylpropan-1-amine), 3,3'-(1,1,3,3-tetramethoxydisiloxane-1,3-diyl)bis(N,N-diethylpropan-1-amine), 3,3'-(1,1,3,3-tetramethoxydisiloxane-1,3-diyl)bis(N,N-dipropylpropan-1-amine), 3,3'-(1,1,3,3-tetraethoxydisiloxane-1,3-diyl)bis(N,N-diethylpropan-1-amine), 3,3'-(1,1,3,3-tetrapropoxydisiloxane-1,3-diyl)bis(N,N-diethylpropan-1-amine), 3,3'-(1,1,3,3-tetraethoxydisiloxane-1,3-diyl)bis(N,N-dipropylpropan-1-amine), 3,3'-(1,1,3,3-tetrapropoxydisiloxane-1,3-diyl)bis(N,N-dipropylpropan-1-amine), 3,3'-(1,1,3,3-tetramethoxydisiloxane-1,3-diyl)bis(N,N-diethylmethan-1-amine), 3,3'-(1,1,3,3-tetraethoxydisiloxane-1,3-diyl)bis(N,N-diethylmethan-1-amine), 3,3'-(1,1,3,3-tetrapropoxydisiloxane-1,3-diyl)bis(N,N-diethylmethan-1-amine), 3,3'-(1,1,3,3-tetramethoxydisiloxane-1,3-diyl)bis(N,N-dimethylmethan-1-amine), 3,3'-(1,1,3,3-tetramethoxydisiloxane-1,3-diyl)bis(N,N-dipropylmethan-1-amine), 3,3'-(1,1,3,3-tetrapropoxydisiloxane-1,3-diyl)bis(N,N-dimethylmethan-1-amine), 3,3'-(1,1,3,3-tetrapropoxydisiloxane-1,3-diyl)bis(N,N-dipropylmethan-1-amine), 3,3'-(1,1,3,3-tetraethoxydisiloxane-1,3-diyl)bis(N,N-dimethylmethan-1-amine), 3,3'-(1,1,3,3-tetraethoxydisiloxane-1,3-diyl)bis(N,N-dipropylmethan-1-amine), N,N'-((1,1,3,3-tetramethoxydisiloxane-1,3-diyl)bis(propan-3,1-diyl))bis(1,1,1-trimethyl-N-(trimethylsilyl)silanamine, N,N'-((1,1,3,3-tetraethoxydisiloxane-1,3-diyl)bis(propan-3,1-diyl))bis(1,1,1-trimethyl-N-(trimethylsilyl)silanamine, N,N'-((1,1,3,3-tetrapropoxydisiloxane-1,3-diyl)bis(propan-3,1-diyl))bis(1,1,1-trimethyl-N-(trimethylsilyl)silanamine, N,N'-((1,1,3,3-tetramethoxydisiloxane-1,3-diyl)bis(propan-3,1-diyl))bis(1,1,1-trimethyl-N-phenylsilanamine, N,N'-( (1,1,3,3-tetraethoxydisiloxane-1,3-diyl)bis(propan-3,1-diyl))bis(1,1,1-trimethyl-N-phenylsilanamine, N,N'-((1,1,3,3-tetrapropoxydisiloxane-1,3-diyl)bis(propan-3,1-diyl))bis(1,1,1-trimethyl-N-phenylsilanamine, 1,3-bis(3-(1H-imidazol-1-yl)propyl)-1,1,3,3-tetramethoxydisiloxane, 1,3-bis(3-(1H-imidazol-1-yl)propyl)-1,1,3,3-tetraethoxydisiloxane, and 1,3-bis(3-(1H-imidazol-1-yl)propyl)-1,1,3,3-tetrapropoxydisiloxane.

In another embodiment, the modifier may include a compound represented by Formula 4 below.

[Formula 4]

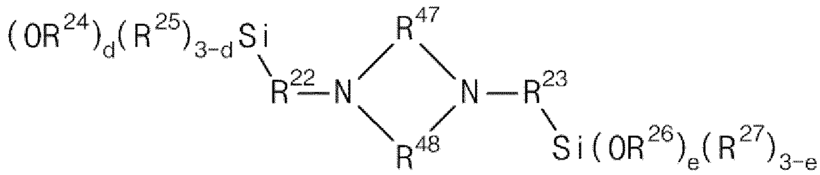

In Formula 4, $R^{22}$ and $R^{23}$ may be each independently an alkylene group of 1 to 20 carbon atoms, or $-R^{28}[OR^{29}]_f$, $R^{24}$ to $R^{27}$ may be each independently an alkyl group of 1 to 20 carbon atoms or an aryl group of 6 to 20 carbon atoms, $R^{28}$ and $R^{29}$ may be each independently an alkylene group of 1 to 20 carbon atoms, $R^{47}$ and $R^{48}$ may be each independently a divalent hydrocarbon group of 1 to 6 carbon atoms, d and e may be each independently 0 or an integer selected from 1 to 3, where d+e may be an integer of 1 or more, and f may be an integer of 1 to 30.

Particularly, in Formula 4, $R^{22}$ and $R^{23}$ may be each independently an alkylene group of 1 to 10 carbon atoms, or - $R^{28}[OR^{29}]_f$, $R^{24}$ to $R^{27}$ may be each independently an alkyl group of 1 to 10 carbon atoms, $R^{28}$ and $R^{29}$ may be each independently an alkylene group of 1 to 10 carbon atoms, d and e may be each independently 0 or an integer selected from 1 to 3, where d+e may be an integer of 1 or more, and f may be an integer of 1 to 30.

More particularly, the compound represented by Formula 4 may be a compound represented by Formula 4a, Formula 4b, or Formula 4c below.

[Formula 4a]

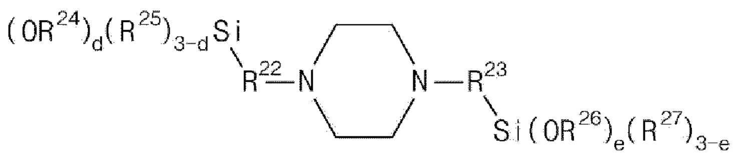

[Formula 4b]

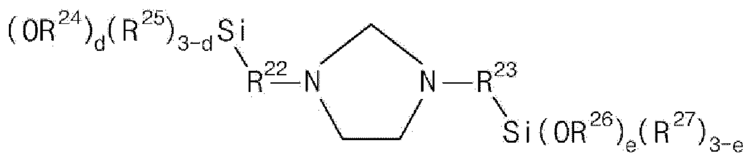

[Formula 4c]

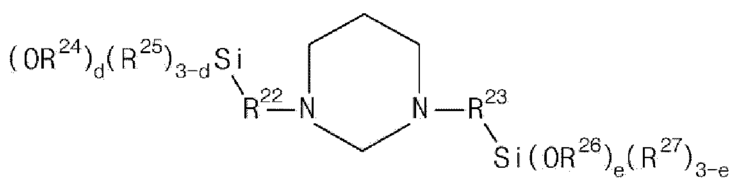

In Formula 4a, Formula 4b and Formula 4c, $R^{22}$ to $R^{27}$, d and e are the same as described above.

In a more particular embodiment, the compound represented by Formula 4 may be one selected from the group consisting of 1,4-bis(3-(3-(triethoxysilyl)propoxy)propyl)piperazine, 1,4-bis(3-(triethoxysilyl)propyl)piperazine, 1,4-bis(3-(trimethoxysilyl)propyl)piperazine, 1,4-bis(3-(dimethoxymethylsilyl)propyl)piperazine, 1-(3-(ethoxydimethlylsilyl)propyl)-4-(3-(triethoxysilyl)propyl)piperazine, 1-(3-(ethoxydimethyl)propyl)-4-(3-(triethoxysilyl)methyl)piperazine, 1-(3-(ethoxydimethyl)methyl)-4-(3-(triethoxysilyl)propyl)piperazine, 1,3-bis(3-(triethoxysilyl)propyl)imidazolidine, 1,3-bis(3-(dimethoxyethylsilyl)propyl)imidazolidine, 1,3-bis(3-(trimethoxysilyl)propyl)hexahydropyrimidine, 1,3-bis(3-(triethoxysilyl)propyl)hexahydropyrimidine and 1,3-bis(3-(tributoxysilyl)propyl)-1,2,3,4-tetrahydropyrimidine.

In another embodiment, the modifier may include a compound represented by Formula 5 below.

[Formula 5]

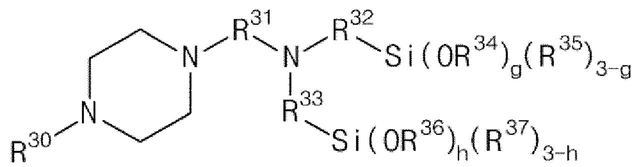

In Formula 5, $R^{30}$ may be a monovalent hydrocarbon group of 1 to 30 carbon atoms, $R^{31}$ to $R^{33}$ may be each independently an alkylene group of 1 to 10 carbon atoms, $R^{34}$ to $R^{37}$ may be each independently an alkyl group of 1 to 10 carbon atoms, and g and h may be each independently 0 or an integer selected from 1 to 3, where g+h may be an integer of 1 or more.

In another embodiment, the modifier may include a compound represented by Formula 6 below.

[Formula 6]

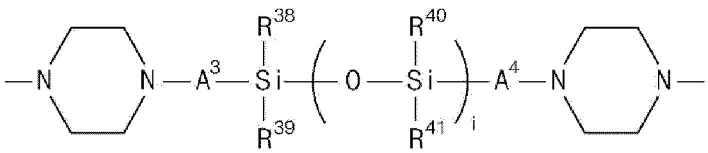

In Formula 6, $A^3$ and $A^4$ may be each independently an alkylene group of 1 to 10 carbon atoms, $R^{38}$ to $R^{41}$ may be each independently an alkyl group of 1 to 10 carbon atoms, or an alkoxy group of 1 to 10 carbon atoms, and i may be an integer selected from 1 to 30.

In another embodiment, the modifier may include one or more selected from the group consisting of 3,4-bis(2-methoxyethoxy)-N-(4-(triethoxysilyl)butyl)aniline, N,N-diethyl-3-(7-methyl-3,6,8,11-tetraoxa-7-silatridecan-7-yl)propan-1-amine, 2,4-bis(2-methoxyethoxy)-6-((trimethylsilyl)methyl)-1,3,5-triazine and 3,14-dimethoxy-3,8,8,13-tetramethyl-2,14-dioxa-7,9-dithia-3,8,13-trisilapentadecane.

In another embodiment, the modifier may include a compound represented by Formula 7 below.

[Formula 7]

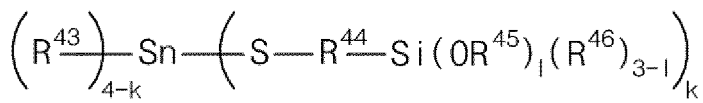

In Formula 7, $R^{43}$, $R^{45}$ and $R^{46}$ may be each independently an alkyl group of 1 to 10 carbon atoms, $R^{44}$ may be an alkylene group of 1 to 10 carbon atoms, and k may be an integer selected from 1 to 4.

In a more particular embodiment, the compound represented by Formula 7 may be one selected from the group consisting of 8,8-dibutyl-3,13-dimethoxy-3,13-dimethyl-2,14-dioxa-7,9-dithia-3,13-disila-8-stannapentadecane, 8,8-dimethyl-3,13-dimethoxy-3,13-dimethyl-2,14-dioxa-7,9-dithia-3,13-disila-8-stannapentadecane, 8,8-dibutyl-3,3,13,13-tetramethoxy-2,14-dioxa-7,9-dithia-3,13-disila-8-stannapentadecane and 8-butyl-3,3,13,13-tetramethoxy-8-((3-(trimethoxysilyl)propyl)thio)-2,14-dioxa-7,9-dithia-3,13-disila-8-stannapentadecane.

In another embodiment, the modifier may include a compound represented by Formula 8 below.

[Formula 8]

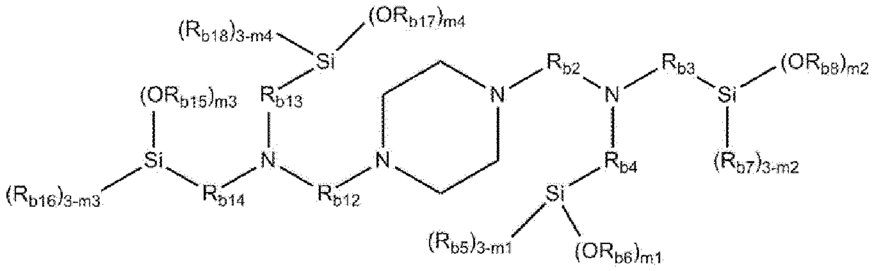

In Formula 8, $R_{b2}$ to $R_{b4}$ are each independently an alkylene group of 1 to 10 carbon atoms, $R_{b5}$ to $R_{b8}$ are each independently an alkyl group of 1 to 10 carbon atoms, $R_{b13}$ and $R_{b14}$ are each independently an alkylene group of 1 to 10 carbon atoms, $R_{b15}$ to $R_{b18}$ are each independently an alkyl group of 1 to 10 carbon atoms, and $_{m1}$, $_{m2}$, $_{m3}$ and $_{m4}$ are each independently an integer of 1 to 3.

In another embodiment, the modifier may include a compound represented by Formula 9 below.

[Formula 9]

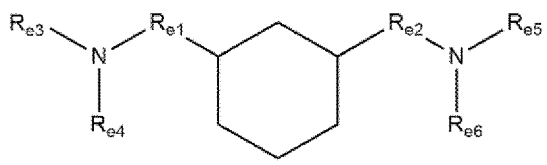

In Formula 9, $R_{e1}$ and $R_{e2}$ are each independently an alkylene group of 1 to 10 carbon atoms, $R_{e3}$ to $R_{e6}$ are each independently hydrogen, an alkyl group of 1 to 10 carbon atoms or $-R_{e7}SiR_{e8}R_{e9}R_{e10}$, where at least one among $R_{e3}$ to $R_{e6}$ is $-R_{e7}SiR_{e8}R_{e9}R_{e10}$, wherein $R_{e7}$ is a single bond or an alkylene group of 1 to 10 carbon atoms, $R_{e8}$ to $R_{e10}$ are each independently an alkyl group of 1 to 10 carbon atoms or an alkoxy group of 1 to 10 carbon atoms, where at least one among $R_{e8}$ to $R_{e10}$ is an alkoxy group of 1 to 10 carbon atoms.

In another embodiment, the modifier may include a compound represented by Formula 10 below.

[Formula 10]

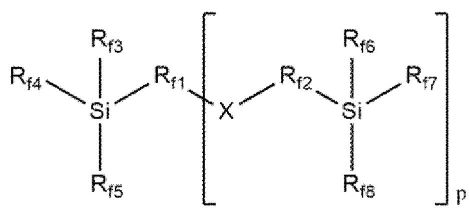

In Formula 10, X is O or S, $R_{f1}$ and $R_{f2}$ are each independently a single bond or an alkylene group of 1 to 10 carbon atoms,

$R_{f3}$ to $R_{f8}$ are each independently a hydrogen atom, an alkyl group of 1 to 10 carbon atoms, an alkoxy group of 1 to 10 carbon atoms, an aryl group of 6 to 10 carbon atoms, a cycloalkyl group of 5 to 10 carbon atoms or an aralkyl group of 7 to 14 carbon atoms, and p is an integer of 0 or 1, where if p is 0, $R_{f1}$ is an alkyl group of 1 to 10 carbon atoms or an alkoxy group of 1 to 10 carbon atoms.

In another embodiment, the modifier may include a compound represented by Formula 11 below.

[Formula 11]

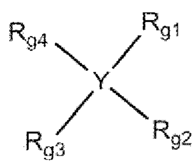

In Formula 11, $R_{g1}$ to $R_{g4}$ are each independently hydrogen, an alkyl group of 1 to 10 carbon atoms, an alkoxy group of 1 to 10 carbon atoms, an aryl group of 6 to 12 carbon atoms or $-R_{g5}SiOR_{g6}$, where at least one among $R_{g1}$ to $R_{g4}$ is $-R_{g5}SiOR_{g6}$, wherein $R_{g5}$ is a single bond or an alkylene group of 1 to 10 carbon atoms, $R_{g6}$ is an alkyl group of 1 to 10 carbon atoms, and Y is C or N, where if Y is N, $R_{g4}$ is not present.

In another embodiment, the modifier may include a compound represented by Formula 12 below.

[Formula 12]

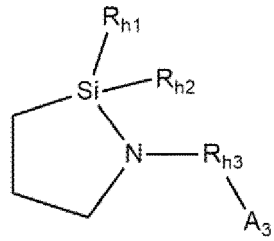

In Formula 12, $R_{h1}$ and $R_{h2}$ are each independently an alkyl group of 1 to 10 carbon atoms or an alkoxy group of 1 to 10 carbon atoms, $R_{h3}$ is a single bond or an alkylene group of 1 to 10 carbon atoms, and $A_3$ is $-Si(R_{h4}R_{h5}R_{h6})$ or $-N[Si(R_{h7}R_{h8}R_{h9})]_2$, where $R_{h4}$ to $R_{h9}$ are each independently an alkyl group of 1 to 10 carbon atoms or an alkoxy group of 1 to 10 carbon atoms.

In another embodiment, the modifier may include a compound represented by Formula 13 below.

[Formula 13]

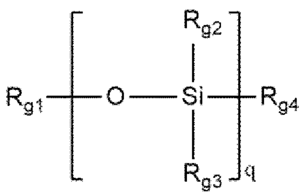

In Formula 13, $R_{g1}$ to $R_{g3}$ are each independently an alkyl group of 1 to 10 carbon atoms or an alkoxy group of 1 to 10 carbon atoms, $R_{g4}$ is an alkoxy group of 1 to 10 carbon atoms, and q is an integer of 2 to 100.

*Shrink factor*

The oil-extended modified conjugated diene-based polymer according to an embodiment of the present invention has a shrink factor (g') obtained by the measurement by a gel permeation chromatography-light scattering method equipped with a viscosity detector of 0.1 or more, preferably, 0.1 to 1.0, more particularly, 0.3 to 0.9.

Here, the shrink factor (g') obtained through the measurement by the gel permeation chromatography-light scattering method is a ratio of the intrinsic viscosity of a branched polymer with respect to the intrinsic viscosity of a linear polymer, which have the same absolute molecular weight, and may be used as the index of the branch structure of the branched polymer, that is, the index of the ratio occupied by branches. For example, according to the decrease of the shrink factor, the number of branches of the corresponding polymer tends to increase, and accordingly, in case of comparing polymers having the same absolute molecular weight, the shrink factor decreases with the increase of the branches, and the shrink factor may be used as the index of the degree of branching.

In addition, the shrink factor is obtained by measuring chromatogram using a gel chromatography-light scattering

measurement apparatus equipped with a viscosity detector and computing based on a solution viscosity and a light scattering method, and particularly, absolute molecular weights and intrinsic viscosity corresponding to each absolute molecular weight were obtained using a GPC-light scattering measurement apparatus equipped with a light scattering detector in which two columns using a polystyrene-based gel as a filler are connected and a viscosity detector, the intrinsic viscosity of a linear polymer corresponding to the absolute molecular weight was computed, and the shrink factor was obtained as a ratio of intrinsic viscosity corresponding to each absolute molecular weight. For example, the shrink factor was shown by obtaining absolute molecular weights from a light scattering detector by injecting a specimen into a GPC-light scattering measurement apparatus (Viscotek TDAmax, Malvern Co.) equipped with a light scattering detector and a viscosity detector, obtaining intrinsic viscosity [η] on the absolute molecular weight from the light scattering detector and the viscosity detector, computing the intrinsic viscosity $[\eta]_0$ of a linear polymer on the absolute molecular weight through Mathematical Equation 1 below, and showing an average value of the ratio of intrinsic viscosities ($[\eta]/[\eta]_0$) corresponding to each absolute molecular weight as the shrink factor. In this case, a mixture solution of tetrahydrofuran and N,N,N',N'-tetramethylethylenediamine (controlled by mixing 20 mL of N,N,N',N'-tetramethylethylenediamine with 1 L of tetrahydrofuran) was used as an eluent, PL Olexis (Agilent Co.) was used as a column, measurement was conducted under conditions of an oven temperature of 40°C and a THF flow rate of 1.0 mL/min, and a specimen was prepared by dissolving 15 mg of a polymer in 10 mL of THF.

[Mathematical Equation 1]

$$[\eta]_0=10^{-3.883}M^{0.771}$$

In Mathematical Equation 1, M is an absolute molecular weight.

In addition, the oil-extended modified conjugated diene-based polymer may have the vinyl content of 5 wt% or more, 10 wt% or more, or 10 wt% to 60 wt%. Here, the vinyl content may mean the amount of not 1,4-added but 1,2-added conjugated diene-based monomer based on 100 wt% of a conjugated diene-based polymer composed of a monomer having a vinyl group and an aromatic vinyl-based monomer.

*Mooney relaxation ratio*

In another embodiment, the oil-extended modified conjugated diene-based polymer may have a mooney relaxation ratio measured at 100°C of less than 0.7, and may be 0.7 to 3.0. Particularly, in case of a polymer of a branch type having a large degree of branching, the mooney relaxation ratio may be less than 0.7, preferably, 0.6 or less, more preferably, 0.5 or less, optimally 0.4 or less, and in case of a linear polymer having a small degree of branching, the mooney relaxation ratio may preferably be 0.7 to 2.5, more preferably, 0.7 to 2.0.

Here, the mooney relaxation ratio represents the stress change shown as the response to the same amount of strain, and may be measured using a mooney viscometer. Particularly, the mooney relaxation ratio was obtained using a large rotor of MV2000E of Monsanto Co. in conditions of 100°C and a rotor speed of 2±0.02 rpm, by standing a polymer at room temperature (23±5°C) for 30 minutes or more, collecting 27±3 g of the polymer and putting in a die cavity, applying torque by operating a Platen and measuring mooney viscosity, and measuring the slope value of the change of the mooney viscosity shown while releasing torque.

Meanwhile, the mooney relaxation ratio may be used as the index of the branch structure of a corresponding polymer. For example, in case of comparing polymers having the same mooney viscosity, the mooney relaxation ratio decreases with the increase of branching and may be used as the index of the degree of branching.

*Other properties of polymer*

The oil-extended (modified) conjugated diene-based polymer according to an embodiment of the present invention may include a functional group derived from a modification initiator at the other terminal in addition to one terminal including a functional group derived from a modifier, and here, the modification initiator may be a reaction product of an N-functional group-containing compound and an organometallic compound.

Particularly, the N-functional group-containing compound may be a substituted with a substituent or unsubstituted aromatic hydrocarbon compound including an N-functional group including an amino group, amide group, amino group, imidazole group, imidazole group, pyrimidyl group or cyclic amino group, and the substituent may be an alkyl group of 1 to 20 carbon atoms, a cycloalkyl group of 3 to 20 carbon atoms, an aryl group of 6 to 20 carbon atoms, an alkylaryl group of 7 to 20 carbon atoms, an arylalkyl group of 7 to 20 carbon atoms or an alkoxysilyl group of 1 to 10 carbon atoms.

According to an embodiment of the present invention, the oil-extended (modified) conjugated diene-based

polymer may have a weight average molecular weight (Mw) measured by gel permeation chromatography (GPC) of 300,000 g/mol to 3,000,000 g/mol, 400,000 g/mol to 2,500,000 g/mol, or 500,000 g/mol to 2,000,000 g/mol, and within this range, running resistance and wet skid resistance may be excellent in a balanced way even better.

In addition, the oil-extended (modified) conjugated diene-based polymer according to an embodiment of the present invention may be a polymer having a high molecular weight with a weight average molecular weight of 800,000 g/mol or more, preferably, 1,000,000 g/mol or more, and accordingly, a polymer having excellent tensile properties may be achieved, and if prepared by the above-described preparation method, effects of extending the chain of a polymer long may be achieved together with the control of microstructure.

The oil-extended (modified) conjugated diene-based polymer may have a number average molecular weight (Mn) of 1,000 g/mol to 2,000,000 g/mol, 10,000 g/mol to 1,500,000 g/mol, or 100,000 g/mol to 1,200,000 g/mol, and the number average molecular weight may preferably be 400,000 g/mol or more, more preferably, 500,000 g/mol or more. In addition, a peak top molecular weight (Mp) may be 1,000 g/mol to 3,000,000 g/mol, 10,000 g/mol to 2,000,000 g/mol, or 100,000 g/mol to 2,000,000 g/mol. Within these ranges, excellent effects of rolling resistance and wet skid resistance may be achieved.

In addition, the oil-extended (modified) conjugated diene-based polymer may have a unimodal molecular weight distribution curve by gel permeation chromatography (GPC) and molecular weight distribution of 1.0 to 3.0, preferably, 1.0 to 2.5, more preferably, 1.0 to 2.0, further more preferably, 1.0 to less than 1.7, and here, the unimodal curve shape and molecular weight distribution may be satisfied at the same time by a continuous type polymerization, which will be explained later.

Generally, there are problems in that, in a continuous-type polymerization, molecular weight distribution shows unimodal and broad, and processability is excellent, but tensile and viscoelasticity properties are poor, and in a batch-type polymerization, molecular weight distribution shows bimodal and narrow, and tensile and viscoelasticity properties are excellent, but processability is poor, and productivity is low. However, if applying a preparation method which will be explained later according to an embodiment of the present invention, the molecular weight distribution may be selectively reduced to the maximum though prepared by a continuous-type, and accordingly, the control of the balance among physical properties such as processability, tensile properties and viscoelasticity properties may become easy.

In addition, the oil-extended (modified) conjugated diene-based polymer according to an embodiment of the present invention is required to satisfy the mooney viscosity measured under conditions of ASTM D1646 of 40 to 140, preferably, 45 to 120. The measure for evaluating processability may be a lot, but if the mooney viscosity satisfies the above-described range, processability may be significantly excellent.

The oil-extended (modified) conjugated diene-based polymer according to an embodiment of the present invention specifies a polymer structure so as to have a difference between glass transition initiation temperature and termination temperature through the control of the microstructure of the polymer, such as the aforementioned styrene bond content and 1,2-vinyl bond content, and through the selective control of a weight average molecular weight, a molecular weight distribution curve shape, molecular weight distribution, N and Si atom contents, and mooney viscosity, effects of improving abrasion resistance and wet skid resistance in a balanced way could be expected, while maintaining excellent tensile properties, fuel consumption properties and processability.

## Preparation method of oil-extended conjugated diene-based polymer

In order to prepare the oil-extended conjugated diene-based polymer, the present invention provides a method for preparing a conjugated diene-based polymer as follows.

The method for preparing an oil-extended conjugated diene-based polymer is characterized in being a continuous-type preparation method and including polymerizing a conjugated diene-based monomer and an aromatic vinyl-based monomer in the presence of a hydrocarbon solvent, a polymerization initiator and a polar additive (S1); and mixing a vegetable oil after step (S1) (S2), wherein step (S1) is continuously performed in two or more polymerization reactors, a polymer is transported to a second reactor at a point where a polymerization conversion ratio in a first reactor is 70% to 85%, and a polar additive, or a polar additive and a conjugated diene monomer are additionally added to the second reactor.

Hereinafter, the explanation on the physical properties of the oil-extended conjugated diene-based polymer, such as viscoelasticity behavior properties has been provided above, and the explanation will be given mainly with the preparation method.

In addition, the explanation on the conjugated diene-based monomer and aromatic vinyl-based monomer used for the polymerization is provided above, and the description thereof will be omitted.

The hydrocarbon solvent is not specifically limited, but may be, for example, one or more selected from the group consisting of n-pentane, n-hexane, n-heptane, isooctane, cyclohexane, toluene, benzene and xylene.

The polymerization initiator may be used in 0.1 equivalents to 3.0 equivalents, preferably, 0.1 equivalents to 2.0 equivalents, more preferably, 0.5 equivalents to 1.5 equivalents based on 1.0 equivalent of the monomer. In another

embodiment, the polymerization initiator may be used in 0.01 mmol to 10 mmol, 0.05 mmol to 5 mmol, 0.1 mmol to 2 mmol, 0.1 mmol to 1 mmol, or 0.15 to 0.8 mmol based on total 100 g of the monomer. Here, the total 100 g of the monomer may be a conjugated diene-based monomer, or the sum of a conjugated diene-based monomer and an aromatic vinyl-based monomer.

Meanwhile, the polymerization initiator may be an organometallic compound, for example, one or more selected from the group consisting of an organolithium compound, an organosodium compound, an organopotassium compound, an organorubidium compound and an organocesium compound.

Particularly, the organometallic compound may be one or more selected from the group consisting of methyllithium, ethyllithium, propyllithium, n-butyllithium, s-butyllithium, t-butyllithium, hexyllithium, n-decyllithium, t-octyllithium, phenyllithium, 1-naphthyl lithium, n-eicosyl lithium, 4-butylphenyl lithium, 4-tolyl lithium, cyclohexyl lithium, 3,5-di-n-heptylcyclohexyl lithium, 4-cyclopentyl lithium, naphthyl sodium, naphthyl potassium, lithium alkoxide, sodium alkoxide, potassium alkoxide, lithium sulfonate, sodium sulfonate, potassium sulfonate, lithium amide, sodium amide, potassium amide, and lithium isopropylamide.

In another embodiment, the polymerization initiator may be a modification initiator, and the modification initiator may be a reaction product of an N-functional group-containing compound and the organometallic compound.

*Step S1*

According to an embodiment of the present invention, step (S1) in the preparation method is a step of performing polymerization reaction of a conjugated diene-based monomer and an aromatic vinyl-based monomer by, for example, anionic polymerization. In a particular embodiment, the anionic polymerization may be a living anionic polymerization by which an anionic active part is formed at the polymerization terminal through a propagation reaction by anions. In addition, the polymerization of step (S1) may be a polymerization with heating, an isothermal polymerization, or a polymerization at a constant temperature (adiabatic polymerization). The polymerization at a constant temperature may mean a polymerization method including a step of polymerizing using self-generated heat of reaction without optionally applying heat after adding a polymerization initiator, the polymerization with heating may mean a polymerization method including injecting the polymerization initiator and then, increasing the temperature by optionally applying heat, and the isothermal polymerization may mean a polymerization method by which the temperature of a polymer is kept constant by increasing heat by applying heat or taking heat after injecting the polymerization initiator.

In addition, according to an embodiment of the present invention, the polymerization of step (S1) may be performed by further adding a diene-based compound of 1 to 10 carbon atoms in addition to the conjugated diene-based monomer, and in this case, effects of preventing the formation of gel on the wall of a reactor during operating for a long time may be achieved. The diene-based compound may be, for example, 1,2-butadiene.

In addition, according to an embodiment of the present invention, the polymerization of step (S1) is performed in two or more polymerization reactors, and a polymerization conversion ratio in the first polymerization reactor among the polymerization reactors may be 70% to 85%, or 70% to 80%. That is, the polymerization of step (S1) may be only performed until the polymerization conversion ratio in the first polymerization reactor becomes 70% or more, 70% to 85%, or 70% to 80%.

Within this range, side reactions occurring while forming a polymer after initiating polymerization reaction may be restrained and the microstructure of a polymer may be easily controlled, and accordingly, the full width at half maximum of a tan $\delta$ peak is broadened by a dynamic mechanical analysis, and thus, the basis of improving abrasion resistance may be provided.

The polymerization in the first reactor may be performed, for example, in a temperature range of 80°C or less, -20°C to 80°C, 0°C to 80°C, 0°C to 70°C, or 10°C to 70°C, and in this range, the molecular weight distribution of the polymer may be controlled narrow, and excellent effects of improving physical properties may be achieved.

According to an embodiment of the present invention, step (S1) is performed in two or more reactors, and after performing polymerization until the aforementioned conversion ratio in the first reactor is achieved, the polymer is transported to the second reactor, and the additional injection of a polar additive or a conjugated diene-based monomer to the second reactor may be performed.

In this case, the polar additive, or the polar additive and the conjugated diene-based monomer, additionally injected may be injected at once or in order, and may be injected in installments at various points among the points in the range or injected continuously within the point in the range.

The additional injection of the polar additive, or the polar additive and conjugated diene-based monomer may be a means for achieving the glass transition temperature properties of a polymer prepared together with for controlling the conversion ratio in the first reactor. Through the additional injection of the polar additive, a power may be further applied to polymerization reaction after a specific conversion ratio to arise the deformation of a microstructure.

Particularly, in the case of copolymerizing a conjugated diene-based monomer and an aromatic vinyl-based monomer, a reaction rate difference between the monomers may be corrected by the polar additive to achieve inducing

effects of easy formation of a random copolymer.

In this case, the polar additive additionally injected may be used in a suitable amount in a direction so that the full width at half maximum of a tan δ peak may increase. For example, the polar additive additionally injected may be used in a ratio of 0.001 g to 10 g, or 0.01 g to 1.0 g, more preferably, 0.02 g to 0.5 g based on total 100 g of the monomer used when initiating polymerization.

In addition, the conjugated diene-based monomer selectively additionally injected may be used in an amount of 5 g to 25 g, or 5 g to 20 g based on 100 g of the monomer used when initiating polymerization. If the polar additive or the conjugated diene-based monomer additionally injected is controlled in the aforementioned amounts, there are advantages in that the control of the glass transition temperature of the polymer may be easy, finer control thereof may be possible, and the full width at half maximum of a tan δ peak by dynamic viscoelasticity analysis may be broadened.

The total amount used of the polar additive used in the polymerization of step (S1) may be in a ratio of 0.001 g to 50 g, or 0.002 g to 1.0 g based on total 100 g of the monomer. In another embodiment, the total amount used of the polar additive may be in a ratio of greater than 0 g to 1 g, 0.01 g to 1 g, or 0.1 g to 0.9 g based on total 100 g of the polymerization initiator. Here, the total amount used of the polar additive includes the additionally injected amount of the polar additive.

The polymerization in the second reactor may be performed in a temperature range of 80°C or less, -20°C to 80°C, 0°C to 80°C, 0°C to 70°C, or 10°C to 70°C, and in this range, the molecular weight distribution of the polymer may be controlled narrow, and excellent effects of improving physical properties may be achieved.

Meanwhile, in additionally controlling the full width at half maximum of a tan δ peak by the dynamic mechanical analysis, the polymerization temperatures in the first reactor and the second reactor may also influence, and in this case, it is preferable to control the polymerization temperature of the second reactor lower than the polymerization temperature of the first reactor, and the polymerization temperature of the second reactor is preferably 60°C or higher.

The polar additive may be, for example, one or more selected from the group consisting of tetrahydrofuran, 2,2-di(2-tetrahydrofuryl)propane, diethyl ether, cyclopentyl ether, dipropyl ether, ethylene methyl ether, ethylene glycol dimethyl ether, diethylene glycol, dimethyl ether, tert-butoxy ethoxy ethane, bis(3-dimethylaminoethyl)ether, (dimethylaminoethyl) ethyl ether, trimethylamine, triethylamine, tripropylamine, N,N,N',N'-tetramethylethylenediamine, sodium mentholate and 2-ethyl tetrahydrofufuryl ether, and may preferably be 2,2-di(2-tetrahydrofuryl)propane, triethylamine, tetramethylethylenediamine, sodium mentholate or 2-ethyl tetrahydrofufuryl ether.

Meanwhile, the polymerization conversion ratio may be determined, for example, by measuring the solid concentration in a polymer solution phase including the polymer during polymerization, and in a particular embodiment, in order to secure the polymer solution, a cylinder type container is installed at the outlet of each polymerization reactor to fill up a certain amount of the polymer solution in the cylinder type container, and then, the cylinder type container is separated from the reactor, the weight (A) of the cylinder filled with the polymer solution is measured, the polymer solution filled in the cylinder type container is transported to an aluminum container, for example, an aluminum dish, the weight (B) of the cylinder type container from which the polymer solution is removed is measured, the aluminum container containing the polymer solution is dried in an oven of 140°C for 30 minutes, the weight (C) of a dried polymer is measured, and calculation is performed according to Mathematical Equation 2 below.

[Mathematical Equation 2]

$$Polymerization\ conversion\ ratio\ (\%) = \frac{\text{Weight (C)}}{[(\text{Weight (A)} - \text{Weight (B)})\ \text{x Total solid content (TSC)}]} \text{ x } 100$$

In Mathematical Equation 2, the total solid content is the total solid (monomer) content in a polymer solution separated from each reactor and is the weight percent of the solid content with respect to 100% of the polymer solution. For example, if the total solid content is 20 wt%, calculation may be performed by substituting 20/100, i.e., 0.2 in Mathematical Equation 2.

Meanwhile, the polymer polymerized in the second reactor may be transported to a final polymerization reactor in order, and polymerization may be performed until the final polymerization conversion ratio becomes 95% or more. After performing the polymerization in the second reactor, the polymerization conversion ratio for each reactor of the third reactor to the final polymerization reactor, may be suitably controlled to control molecular weight distribution. After that, a reaction terminator for deactivating an activation part may be injected, and in case of preparing a modified conjugated diene-based polymer, an active polymer may be transported to a modification reaction process, and the reaction terminator may use any materials commonly used in this technical field, without limitation.

In addition, the active polymer prepared by step (S1) may mean a polymer in which a polymer anion and the

organometallic cation of a polymerization initiator are combined.

*Step S2*

Step (S2) may be performed by adding and mixing a vegetable oil prior to drying the polymer after step (S1).

*Preparation method of modified conjugated diene-based polymer*

The present invention provides a method for preparing a modified conjugated diene-based polymer as follows, to prepare the modified conjugated diene-based polymer.

The method for preparing a modified conjugated diene-based polymer is a continuous-type preparation method and is characterized in including polymerizing a conjugated diene-based monomer and an aromatic vinyl-based monomer in the presence of a hydrocarbon solvent, a polymerization initiator and a polar additive to prepare an active polymer (S3); performing modification reaction by reacting the active polymer with a modifier (S4); and adding and mixing a vegetable oil (S5), wherein step (S3) is continuously performed in two or more polymerization reactors, a polymer is transported to a second reactor when a polymerization conversion ratio in a first reactor is 70% to 85%, and a polar additive, or a polar additive and a conjugated diene-based monomer are additionally added to the second reactor.

In the preparation method of the modified conjugated diene-based polymer, step (S3) for preparing the active polymer and step (S5) for mixing the vegetable oil are the same as step (S1) and (S2) of the conjugated diene-based polymer, respectively, and the description thereon will be omitted.

*Step S4*

Step (S4) is a modification step by reacting the active polymer prepared in step (S3) with a modifier, and the anion active part of the active polymer and an alkoxy group bonded to the silane of the modifier may react. The modifier may be used in an amount of 0.01 mmol to 10 mmol based on total 100 g of the monomer. In another embodiment, the modifier may be used in a molar ratio of 1:0.1 to 10, 1:0.1 to 5, or 1:0.1 to 1:3, based on 1 mol of the polymerization initiator of step (S1) .

In addition, according to an embodiment of the present invention, the modifier may be injected into a modification reactor, and step (S4) may be conducted in the modification reactor. In another embodiment, the modifier may be injected into a transporting part for transporting the active polymer prepared in step (S3) to a modification reactor for conducting step (S4), and the reaction may be performed by the mixing of the active polymer and the modifier in the transporting part. In this case, the reaction may be modification reaction for simply coupling the modifier with the active polymer, or coupling reaction for connecting the active polymer based on the modifier.

Meanwhile, in the preparation method of the modified conjugated diene-based polymer, a step of additionally injecting a conjugated diene-based monomer to the active polymer prepared in step (S3) and reacting may be further performed prior to the modification reaction of step (S4), and in this case, modification reaction afterward may become more favorable. In this case, the conjugated diene-based monomer may be injected in 1 mol to 100 mol based on 1 mol of the active polymer.

The preparation method of an oil-extended (modified) conjugated diene-based polymer according to an embodiment of the present invention is a method that may satisfy the properties of the aforementioned oil-extended (modified) conjugated diene-based polymer, and as described above, the effects to achieve in the present invention may be achieved if the properties are satisfied, but through controlling other polymerization conditions diversely, the physical properties of the oil-extended (modified) conjugated diene-based polymer according to the present invention may be achieved.

## Rubber Composition

According to the present invention, a rubber composition including the oil-extended conjugated diene-based polymer or the oil-extended modified conjugated diene-based polymer is provided.

In another embodiment, according to an embodiment of the present invention, there is provided a rubber composition including a conjugated diene-based polymer and a filler, wherein, in a tan $\delta$ graph in accordance with temperature, derived from dynamic viscoelasticity analysis by an Advanced Rheometric Expansion System (ARES), a full width at half maximum (FWHM) value of a tan $\delta$ peak shown in a temperature range of -100°C to 100°C is 31°C or higher, the Advanced Rheometric Expansion System is measured using a dynamic mechanical analyzer with a torsional mode under conditions of a frequency of 10 Hz, a strain of 0.5%, and a temperature rise rate of 5°C/min, and the conjugated diene-based polymer comprises a vegetable oil.

The full width at half maximum of a tan $\delta$ peak may be 31°C or higher, preferably, 35°C or higher, more preferably, 40°C or higher. In addition, the full width at half maximum may be 100°C to the maximum, preferably, 80°C or less. If

the full width at half maximum is less than 31°C, there arise problems of markedly reducing wet skid resistance at the same glass transition temperature, and it is unlikely to achieve a case where the full width at half maximum of the peak is greater than 100°C, but though achieved, phase separation may occur, defects of increasing hysteresis at a high temperature may be inevitably accompanied, and there may arise defects of degrading fuel consumption properties.

In addition, the tan δ peak may be shown at -100°C to 100°C, preferably, -80°C to 20°C, more preferably, -70°C to 0°C. If the peak is shown within the range, more favorable effects of abrasion resistance may be expected. Here, the conjugated diene-based polymer may be unmodified or modified by a modifier.

The rubber composition may include the (modified) conjugated diene-based polymer in an amount of 10 wt% or more, 10 wt% to 100 wt%, or 20 wt% to 90 wt%, and within this range, mechanical properties such as tensile strength and abrasion resistance are excellent, and effects of excellent balance between physical properties may be achieved.

In addition, the rubber composition may further include other rubber components, as necessary, in addition to the (modified) conjugated diene-based polymer, and in this case, the rubber components may be included in an amount of 90 wt% or less based on the total weight of the rubber composition. In a particular embodiment, the other rubber components may be included in an amount of 1 part by weight to 900 parts by weight based on 100 parts by weight of the (modified) conjugated diene-based polymer.

The rubber component may be, for example, natural rubber or synthetic rubber, and may particularly be natural rubber (NR) including cis-1,4-polyisoprene; modified natural rubber which is obtained by modifying or purifying common natural rubber, such as epoxidized natural rubber (ENR), deproteinized natural rubber (DPNR), and hydrogenated natural rubber; and synthetic rubber such as a styrene-butadiene copolymer (SBR), a polybutadiene (BR), a polyisoprene (IR), butyl rubber (IIR), an ethylene-propylene copolymer, a polyisobutylene-co-isoprene, neoprene, a poly(ethylene-co-propylene), a poly(styrene-co-butadiene), a poly(styrene-co-isoprene), a poly(styrene-co-isoprene-co-butadiene), a poly(isoprene-co-butadiene), a poly(ethylene-co-propylene-co-diene), polysulfide rubber, acryl rubber, urethane rubber, silicone rubber, epichlorohydrin rubber, and halogenated butyl rubber, and any one or a mixture of two or more thereof may be used.

The rubber composition may include a filler in 0.1 parts by weight to 200 parts by weight, or 10 parts by weight to 120 parts by weight based on 100 parts by weight of the (modified) conjugated diene-based polymer of the present invention. The filler may be, for example, a silica-based filler, particularly, wet silica (hydrated silicate), dry silica (anhydrous silicate), calcium silicate, aluminum silicate, colloid silica, etc., and preferably, the filler may be wet silica which has the most significant improving effects of destruction characteristics and compatible effects of wet grip. In addition, the rubber composition may further include a carbon-based filler, as necessary.

In another embodiment, if silica is used as the filler, a silane coupling agent may be used together for the improvement of reinforcing and low exothermic properties. Particular examples of the silane coupling agent may include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzolyltetrasulfide, 3-triethoxysilylpropylmethacrylatemonosulfide, 3-trimethoxysilylpropylmethacrylatemonosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, or dimethoxymethylsilylpropylbenzothiazolyltetrasulfide, and any one or a mixture of two or more thereof may be used. Preferably, bis(3-triethoxysilylpropyl)polysulfide or 3-trimethoxysilylpropylbenzothiazyltetrasulfide may be used in consideration of the improving effects of reinforcing properties.

In addition, in the rubber composition according to an embodiment of the present invention, since a modified conjugated diene-based polymer in which a functional group having high affinity with silica is brought in an active part is used as a rubber component, the mixing amount of the silane coupling agent may be smaller than a common case. Thus, the silane coupling agent may be used in an amount of 1 part by weight to 20 parts by weight, or 5 parts by weight to 15 parts by weight based on 100 parts by weight of silica, and within the above range, effects as a coupling agent may be sufficiently shown, and effects of preventing gelation of a rubber component may be achieved.

The rubber composition according to an embodiment of the present invention may be sulfur crosslinkable, and may further include a vulcanizing agent. The vulcanizing agent may particularly be a sulfur powder and may be included in an amount of 0.1 parts by weight to 10 parts by weight based on 100 parts by weight of a rubber component, and within the above range, elasticity and strength required for a vulcanized rubber composition may be secured, and at the same time, an excellent low fuel consumption ratio may be achieved.

The rubber composition according to an embodiment of the present invention may further include various additives used in a common rubber industry in addition to the above components, particularly, a vulcanization accelerator, a process oil, a plasticizer, an antiaging agent, a scorch preventing agent, a zinc white, stearic acid, a thermosetting resin, or a thermoplastic resin.

The vulcanization accelerator may include, for example, thiazole-based compounds such as 2-mercaptobenzothiazole (M), dibenzothiazyldisulfide (DM), and N-cyclohexyl-2-benzothiazylsulfenamide (CZ), or guanidine-based compounds such as diphenylguanidine (DPG), in 0.1 parts by weight to 5 parts by weight based on 100 parts by weight of the rubber component.

The process oil acts as a softener in a rubber composition and may include, for example, paraffin-based, naphthene-based, or aromatic compounds. The aromatic process oil may be used in consideration of tensile strength and abrasion resistance, and the naphthene-based or paraffin-based process oil may be used in consideration of hysteresis loss and properties at a low temperature. The process oil may be included in an amount of 100 parts by weight or less based on 100 parts by weight of the rubber component. Within the above-described range, the deterioration of the tensile strength and low exothermic properties (low fuel consumption ratio) of the vulcanized rubber may be prevented.

The antiaging agent may include, for example, N-isopropyl-N'-phenyl-p-phenylenediamine, N-(1,3-dimethylbutyl)-N'-phenyl-p-phenylenediamine, 6-ethoxy-2,2,4-trimethyl-1,2-dihydroquinoline, or a condensate of diphenylamine and acetone at a high temperature, in 0.1 parts by weight to 6 parts by weight based on 100 parts by weight of the rubber component.

The rubber composition according to an embodiment of the present invention may be obtained by mulling using a mulling apparatus such as a banbury mixer, a roll, and an internal mixer according to a mixing prescription, and a rubber composition having low exothermic properties and good abrasion properties may be obtained by a vulcanization process after a molding process.

Therefore, the rubber composition may be useful to the manufacture of each member of a tire such as a tire tread, an under tread, a side wall, a carcass coating rubber, a belt coating rubber, a bead filler, a chafer, and a bead coating rubber, or to the manufacture of rubber products in various industries such as a vibration-proof rubber, a belt conveyor, and a hose.

Also, the present invention provides a tire manufactured using the rubber composition.

The tire may be a tire or include a tire tread.

## Examples

Hereinafter, the present invention will be explained in more detail referring to embodiments. Embodiments according to the present invention may be modified into various other types, and the scope of the present invention should not be limited to the embodiments described below. The embodiments of the present invention are provided for completely explaining the present invention to a person having an average knowledge in the art.

### Experimental data I

### Example 1

To a first reactor among three continuous stirring liquid phase reactors (CSTR), continuously injected were n-hexane in a flow rate of 5 kg/hr, a monomer solution in which 60 wt% of 1,3-butadiene was dissolved in n-hexane in a flow rate of 1.6 kg/h, a monomer solution in which 60 wt% of styrene was dissolved in n-hexane in a flow rate of 0.31 kg/hr, an initiator solution in which 6.6 wt% of n-butyllithium was dissolved in n-hexane in a flow rate of 8.33 g/hr, and a polar additive solution in which 2 wt% of ditetrahydrofurylpropane was dissolved in n-hexane as a polar additive in a flow rate of 2.25 g/hr. In this case, the internal temperature of the reactor was maintained to 60°C, and when a polymerization conversion ratio reached 70%, a polymerization reactant was transported from the first reactor to a second reactor through a transport pipe.

Then, the temperature of the second reactor was maintained to 60°C, and to the second reactor, continuously injected were a solution in which 60 wt% of 1,3-butadiene was dissolved in n-hexane in a flow rate of 0.2 kg/hr, and a polar additive solution in which 10 wt% of ditetrahydrofurylpropane was dissolved in n-hexane as a polar additive in a flow rate of 6 g/hr to participate in the reaction. When a polymerization conversion ratio reached 95% or more, a polymerization reactant was transported from the second reactor to a third reactor through a transport pipe, and a solution in which 5 wt% of N,N-dimethyl-3-(trimethoxysilyl)propan-1-amine was dissolved in n-hexane as a modifier was injected in a flow rate of 17.8 g/hr, and the reaction was performed for 30 minutes.

After that, soybean oil was continuously injected to the third reactor in a flow rate of 200 g/hr and mixed.

Then, an IR1520 (BASF Co.) solution in which 30 wt% of an antioxidant was dissolved, was injected in a rate of 100 g/h and stirred. The polymer thus obtained was injected in hot water heated with steam, stirred to remove solvents and roll dried to remove remaining solvents and water to prepare a modified conjugated diene-based polymer.

**Example 2**

A modified conjugated diene-based polymer was prepared by performing the same method as in Example 1 except for continuously injecting to the first reactor, a monomer solution in which 60 wt% of 1,3-butadiene was dissolved in n-hexane in a flow rate of 1.13 kg/hr, a monomer solution in which 60 wt% of styrene was dissolved in n-hexane in a flow rate of 0.28 kg/hr, and the polar additive solution in a flow rate of 4.0 g/hr, transporting the polymer from the first reactor to the second reactor, when the polymerization conversion ratio in the first reactor reached 72%, and injecting to the third reactor, a solution in which 5 wt% of N,N-bis(oxiran-2-ylmethyl)-3-(trimethoxysilyl)propan-1-amine was dissolved in n-hexane as a modifier in a flow rate of 29.0 g/hr, in Example 1.

**Example 3**

A modified conjugated diene-based polymer was prepared by performing the same method as in Example 1 except for continuously injecting to the first reactor, a monomer solution in which 60 wt% of 1,3-butadiene was dissolved in n-hexane in a flow rate of 1.08 kg/hr, a monomer solution in which 60 wt% of styrene was dissolved in n-hexane in a flow rate of 0.35 kg/hr, and the polar additive solution in a flow rate of 3.0 g/hr, injecting to the second reactor, a solution in which 60 wt% of 1,3-butadiene was dissolved in n-hexane in a flow rate of 0.24 kg/hr, and injecting to the third reactor, a solution in which 5 wt% of 3,3'-(piperazine-1,3-diyl)bis(N,N-bis(3-triethoxysilyl)propyl)propan-1-amine was dissolved in n-hexane as a modifier in a flow rate of 60.0 g/hr, in Example 1.

**Example 4**

A modified conjugated diene-based polymer was prepared by performing the same method as in Example 1 except for transporting the polymerization reactant to the second reactor, when the polymerization conversion ratio in the first reactor reached 80%, and injecting to the third reactor, a solution in which 5 wt% of 2,2-dimethoxy-1-(3-(trimethoxysilyl)propyl)-1,2-azasilolidine was dissolved in n-hexane as a modifier in a flow rate of 23.4 g/hr, in Example 1.

**Example 5**

A modified conjugated diene-based polymer was prepared by performing the same method as in Example 1 except for transporting the polymerization reactant from the first reactor to the second reactor, when the polymerization conversion ratio in the first reactor reached 75%, and continuously injecting cottonseed oil instead of the soybean oil in a flow rate of 200 g/hr, in Example 1.

**Example 6**

A modified conjugated diene-based polymer was prepared by performing the same method as in Example 1 except for continuously injecting to the first reactor, a monomer solution in which 60 wt% of 1,3-butadiene was dissolved in n-hexane in a flow rate of 1.37 kg/hr, maintaining the internal temperature of the first reactor to 70°C, transporting the polymerization reactant from the first reactor to the second reactor, when the polymerization conversion ratio in the first reactor reached 77%, and not injecting to the second reactor, a monomer solution in which 60 wt% of 1,3-butadiene was dissolved in n-hexane, in Example 1.

**Comparative Example 1**

A modified conjugated diene-based polymer was prepared by performing the same method as in Example 1 except for injecting to the first reactor, a monomer solution in which 60 wt% of 1,3-butadiene was dissolved in n-hexane in a flow rate of 1.13 kg/hr, and a monomer solution in which 60 wt% of styrene was dissolved in n-hexane in a flow rate of 0.28 kg/hr, transporting the polymerization reactant to the second reactor, when the polymerization conversion ratio in the first reactor reached 78%, and not injecting to the second reactor, 1,3-butadiene and a polar additive, in Example 1.

**Comparative Example 2**

A modified conjugated diene-based polymer was prepared by performing the same method as in Example 1 except for injecting to the first reactor, a monomer solution in which 60 wt% of 1,3-butadiene was dissolved in n-hexane in a flow rate of 1.08 kg/hr, a monomer solution in which 60 wt% of styrene was dissolved in n-hexane in a flow rate of 0.35 kg/hr, and the polar additive solution in a flow rate of 3.0 g/hr, transporting the polymerization reactant to the second reactor, when the polymerization conversion ratio in the first reactor reached 64%, and not injecting to the second reactor,

1,3-butadiene, in Example 1.

**Comparative Example 3**

A modified conjugated diene-based polymer was prepared by performing the same method as in Example 1 except for continuously injecting to the first reactor, an initiator solution in which 6.6 wt% of n-butyllithium was dissolved in n-hexane in a flow rate of 8.34 g/hr, and transporting the polymerization reactant to the second reactor, when the polymerization conversion ratio in the first reactor reached 55%, in Example 1.

**Comparative Example 4**

A modified conjugated diene-based polymer was prepared by performing the same method as in Example 1 except for transporting the polymerization reactant from the first reactor to the second reactor, when the polymerization conversion ratio in the first reactor reached 75%, and not performing a step of injecting to the third reactor and mixing soybean oil, in Example 1.

**Comparative Example 5**

A modified conjugated diene-based polymer was prepared by performing the same method as in Example 1 except for transporting the polymerization reactant from the first reactor to the second reactor, when the polymerization conversion ratio in the first reactor reached 74%, not injecting to the second reactor, 1,3-butadiene and a polar additive, and performing coupling reaction by continuously supplying a solution in which 13.5 wt% of silicon tetrachloride was dissolved in n-hexane as a coupling agent instead of the modifier in a flow rate of 3.7 g/hr, in Example 1.

**Experimental Example 1. Evaluation of properties of polymers**

With respect to each of the modified or unmodified conjugated diene-based polymers prepared in the Examples and Comparative Examples, the styrene unit content and vinyl content in each polymer, a weight average molecular weight (Mw, $\times 10^3$ g/mol), a number average molecular weight molecular (Mn, $\times 10^3$ g/mol), molecular weight distribution (PDI, MWD), and the full width at half maximum of a tan $\delta$ peak were measured. The results are shown in Table 2 below.

1) Styrene bond content and 1,2-vinyl bond content (wt%)

The styrene bond content (SM) and 1,2-vinyl bond content in each polymer were measured and analyzed using Varian VNMRS 500 MHz NMR.
When measuring NMR, 1,1,2,2-tetrachloroethane was used as a solvent, and styrene unit and vinyl contents were calculated by calculating a solvent peak as 6.00 ppm, and regarding 7.2-6.9 ppm as random styrene peaks, 6.9-6.2 ppm as block styrene peaks, 5.8-5.1 ppm as 1,4-vinyl and 1,2-vinyl peaks, and 5.1-4.5 ppm as 1,2-vinyl peaks.

2) Weight average molecular weight (Mw, $\times 10^3$ g/mol), number average molecular weight (Mn, $\times 10^3$ g/mol), and molecular weight distribution (PDI, MWD)

By gel permeation chromatography (GPC) (PL GPC220, Agilent Technologies), a number average molecular weight (Mn) and a weight average molecular weight (Mw) were measured, and molecular weight distribution was calculated by dividing the weight average molecular weight by the number average molecular weight.

- Column: using two of PLgel Olexis (Polymer Laboratories Co.) and one of PLgel mixed-C (Polymer Laboratories Co.) in combination
- Solvent: using a mixture of tetrahydrofuran and 2 wt% of an amine compound
- Flow rate: 1 ml/min
- Specimen concentration: 1-2 mg/ml (diluted in THF)
- Injection amount: 100 $\mu$l
- Column temperature: 40°C
- Detector: Refractive index
- Standard: Polystyrene (calibrated by cubic function)

3) Full width at half maximum (FWHM) of tan δ peak

With respect to the polymers prepared in the Examples and Comparative Examples, in order for dynamic viscoelasticity analysis by an Advanced Rheometric Expansion System (ARES), tan δ in accordance with temperature in a temperature range of -100°C to 100°C was measured using a dynamic mechanical analyzer (TA Co., ARES-G2) with a torsional mode under a frequency of 10 Hz, a strain of 0.5 %, and a temperature rise rate of 5°C/min. A tan δ graph as in FIG. 1 was obtained, and the full width at half maximum of the peak was obtained from the graph.

[Table 2]

| Division | | Example | | | | | | Comparative Example | | | | |
|---|---|---|---|---|---|---|---|---|---|---|---|---|
| | | 1 | 2 | 3 | 4 | 5 | 6 | 1 | 2 | 3 | 4 | 5 |
| NMR (wt% | SM | 17 | 15 | 20 | 17 | 17 | 17 | 17 | 20 | 17 | 17 | 17 |
| | Vinyl | 13 | 25 | 13 | 13 | 13 | 13 | 13 | 13 | 13 | 13 | 13 |
| ) | | | | | | | | | | | | |
| GPC | Mn ($X10^3$ g/mol) | 368 | 355 | 480 | 384 | 367 | 370 | 372 | 404 | 385 | 391 | 473 |
| | Mw ($X10^3$ g/mol) | 587 | 893 | 787 | 722 | 577 | 591 | 600 | 643 | 627 | 610 | 856 |
| | PDI | 1.6 1 | 1.6 7 | 1.6 4 | 1.8 8 | 1.5 7 | 1.6 0 | 1.6 1 | 1.5 9 | 1.6 3 | 1.5 6 | 1.8 1 |
| FWHM of tan δ peak (°C) | | 32 | 35 | 30 | 36 | 33 | 37 | 15 | 16 | 13 | 15 | 17 |
| Si content (ppm) | | 105 . 4 | 105 . 4 | 328 | 210 . 8 | 105 . 4 | 105 . 4 | 105 . 4 | 105 . 4 | 105 . 4 | 105 . 4 | 82 |
| N content (ppm) | | 52. 5 | 52. 5 | 163 | 52. 5 | 52. 5 | 52. 5 | 52. 5 | 52. 5 | 52. 5 | 52. 5 | - |

Referring to Table 2, in the case of the polymers prepared by the preparation method according to the present invention, all the full width at half maximum values of the tan δ peak were shown 20°C or higher, but it was confirmed that all the Comparative Examples not following the preparation method according to the present invention, showed the values of less than 20°C.

Through this, it could be found that according to the preparation method of the present invention, fine control of the microstructure of the polymer may be possible, and the full width at half maximum value of the tan δ peak may be increased.

**Experimental Example 2. Evaluation of properties of rubber composition**

In order to compare and analyze the physical properties of rubber compositions including the modified conjugated diene-based polymers prepared in the Examples and Comparative Examples, and molded articles manufactured therefrom, tensile properties, viscoelasticity properties, abrasion resistance and processability were measured, respectively, and the results are shown in Table 4 below.

1) Preparation of rubber specimen

Compounding was performed using each of the modified or unmodified conjugated diene-based polymers of the Examples, Comparative Examples and Reference Examples as a raw material rubber under the compounding conditions shown in Table 3 below. The raw materials in Table 3 are represented by parts by weight based on 100 parts by weight of the raw material rubber.

[Table 3]

| Division | Raw material | Amount (parts by weight) |
|---|---|---|
| First stage mulling | Rubber | 100 |
| | Silica | 70 |
| | Coupling agent (X50S) | 11.2 |
| | Process oil | 17.5 |
| | Zinc white | 3 |
| | Stearic acid | 2 |
| | Antioxidant | 2 |
| | Antiaging agent | 2 |
| | wax | 1 |
| Second stage mulling | Sulfur | 1.5 |
| | Rubber accelerator | 1.75 |
| | Vulcanization accelerator | 2 |

Particularly, the rubber specimen was mulled via a first stage mulling and a second stage mulling. In the first stage mulling, a raw material rubber, silica (filler), an organic silane coupling agent (X50S, Evonik), a process oil (TADE oil), zinc oxide (ZnO), stearic acid, an antioxidant (TMQ (RD)) (2,2,4-trimethyl-1,2-dihydroquinoline polymer), an antiaging agent (6PPD ((dimethylbutyl)-N-phenylphenylenediamine) and wax (Microcrystaline Wax) were mulled using a banbury mixer equipped with a temperature controlling apparatus. In this case, the initial temperature of a mulling apparatus was controlled to 70°C, and after finishing compounding, a first compound mixture was obtained at a discharge temperature of 145°C. In the second stage mulling, the first compound mixture was cooled to room temperature, and the first compound mixture, sulfur, a rubber accelerator (DPG (diphenylguanidine)), and a vulcanization accelerator (CZ (N-cyclohexyl-2-benzothiazylsulfenamide)) were added to the mulling apparatus and mixed at a temperature of 100°C or less to obtain a second compound mixture. Then, via a curing process at 160°C for 20 minutes, a rubber specimen was formed.

2) Tensile strength (kgf/cm$^2$)

The tensile strength was measured by manufacturing each specimen and measuring tensile strength when broken according to an ASTM 412 tensile test method. Particularly, tensile properties were measured using a tensile tester of Universal Test Machin 4204 (Instron Co.) in a rate of 50 cm/min at room temperature. The resultant values in Table 4 are indexed based on the measured resultant values of Comparative Example 5, and the higher numerical value represents the better results.

3) Abrasion resistance (DIN abrasion test)

With respect to each rubber specimen, DIN abrasion test was conducted based on ASTM D5963 and represented by DIN loss index (loss volume index): abrasion resistance index (ARIA, Method A). In Table 4 below, the resultant values were indexed based on the measured resultant values of Comparative Example 5, and thus, the higher numerical value means better results.

4) Viscoelasticity properties

With respect to the rubber specimens, in order for conducting dynamic viscoelasticity analysis by an Advanced Rheometric Expansion System (ARES), tan δ in accordance with temperature in a temperature range of -100°C to 100°C was measured using a dynamic mechanical analyzer (TA Co., ARES-G2) with a torsional mode under a frequency of 10 Hz, a strain of 0.5 %, and a temperature rise rate of 5°C/min, and a tan δ graph was obtained. In the tan δ graph obtained, a tan δ value at 0°C and a tan δ value at 60°C were confirmed. In this case, if the tan δ value at a low temperature of 0°C increases, wet skid resistance becomes better, and if the tan δ value at a high temperature of 60°C decreases, hysteresis loss decreases, and running resistance (fuel consumption ratio) becomes better. The resultant values in Table 4 were indexed based on the measured resultant values of Comparative Example 5, and thus, the higher numerical

value means better results.

5) Processability properties

By measuring the mooney viscosity (MV, (ML 1+4), @100°C MU) of the first compound mixture obtained during preparing the rubber specimen in 1), the processability properties of each polymer were compared and analyzed, and in this case, the lower the measured value of the moony viscosity is, the better the processability properties are. The resultant values in Table 4 were indexed based on the resultant values of Comparative Example 5, and thus, the higher numerical value means better results.
Particularly, by using MV-2000 (ALPHA Technologies Co.) using Large Rotor at a rotor speed of 2±0.02 rpm at 100°C, each first compound mixture was stood at room temperature (23±3°C) for 30 minutes or more, and 27±3 g was collected and put in a die cavity, and then, Platen was operated for 4 minutes for measurement.

[Table 4]

| Division | | Example | | | | | | Comparative Example | | | | |
|---|---|---|---|---|---|---|---|---|---|---|---|---|
| | | 1 | 2 | 3 | 4 | 5 | 6 | 1 | 2 | 3 | 4 | 5 |
| Tensile strength | | 100 | 101 | 100 | 98 | 99 | 101 | 98 | 100 | 99 | 104 | 100 |
| Viscoela sticity properti es | tan δ at 0°C | 115 | 116 | 118 | 117 | 113 | 114 | 98 | 97 | 99 | 101 | 100 |
| | tan δ at 60°C | 107 | 105 | 106 | 108 | 104 | 105 | 108 | 106 | 107 | 106 | 100 |
| Abrasion resistance | | 125 | 120 | 121 | 119 | 126 | 128 | 109 | 110 | 111 | 91 | 100 |
| Processability | | 100 | 102 | 97 | 98 | 100 | 101 | 101 | 99 | 98 | 84 | 100 |

Referring to Table 4, it could be confirmed that in the cases of rubber specimens including the polymers of Example 1 to Example 6, satisfying the full width at half maximum values of a tan δ peak according to the present invention, improved wet skid resistance and running resistance were shown in a balanced way while maintaining tensile strength and processability to equal levels, and at the same time, showing markedly improved abrasion resistance when compared to Comparative Example 5.
On the contrary, it could be confirmed that in the cases of rubber specimens including the polymers of Comparative Example 1 to Comparative Example 3, wet skid resistance, running resistance and abrasion resistance were not improved in a balanced way, and markedly degraded wet skid resistance and abrasion resistance were shown in contrast to the Examples.
In addition, in the case of a rubber specimen including the polymer of Comparative Example 4, which did not include a vegetable oil, it could be confirmed that abrasion resistance and processability were markedly degraded in contrast to the Examples.
From the results, it could be confirmed that the oil-extended conjugated diene-based polymer of the present invention controls the full width at half maximum value of tan δ through the control of a microstructure, and achieves effects of showing excellent tensile properties, running resistance and processability in a balanced way and at the same time, markedly improved wet skid resistance and abrasion resistance through the inclusion of a vegetable oil.

**Experimental data II**

**Example 7**

To a first reactor among three continuous stirring liquid phase reactors (CSTR), continuously injected were n-hexane in a flow rate of 5 kg/hr, a monomer solution in which 60 wt% of 1,3-butadiene was dissolved in n-hexane in a flow rate of 1.16 kg/h, a monomer solution in which 60 wt% of styrene was dissolved in n-hexane in a flow rate of 0.31 kg/hr, an initiator solution in which 6.6 wt% of n-butyllithium was dissolved in n-hexane in a flow rate of 8.33 g/hr, and a polar additive solution in which 2 wt% of ditetrahydrofurylpropane was dissolved in n-hexane as a polar additive in a flow rate of 2.25 g/hr. In this case, the internal temperature of the reactor was maintained to 60°C, and when a polymerization conversion ratio reached 75%, a polymerization reactant was transported from the first reactor to a second reactor through a transport pipe.
Then, the temperature of the second reactor was maintained to 60°C, and to the second reactor, continuously injected were a solution in which 60 wt% of 1,3-butadiene was dissolved in n-hexane in a flow rate of 0.2 kg/hr, and a polar additive solution in which 10 wt% of ditetrahydrofurylpropane was dissolved in n-hexane as a polar additive in a

flow rate of 6 g/hr to participate in the reaction. When a polymerization conversion ratio reached 95% or more, a polymerization reactant was transported from the second reactor to a third reactor through a transport pipe, and a solution in which 13.5 wt% of silicon tetrachloride was dissolved in n-hexane as a coupling agent was continuously supplied in a flow rate of 3.7 g/hr, and then, coupling reaction was performed.

After that, soybean oil was continuously injected to the third reactor in a flow rate of 200 g/hr and mixed.

Then, an IR1520 (BASF Co.) solution in which 30 wt% of an antioxidant was dissolved, was injected in a rate of 100 g/h and stirred. The polymer thus obtained was injected in hot water heated with steam, stirred to remove solvents and roll dried to remove remaining solvents and water to prepare an unmodified conjugated diene-based polymer.

**Example 8**

An unmodified conjugated diene-based polymer was prepared by performing the same method as in Example 7 except for transporting the polymerization reactant from the first reactor to the second reactor, when the polymerization conversion ratio in the first reactor reached 74%, and continuously injecting cottonseed oil instead of the soybean oil in a flow rate of 200 g/hr, in Example 7.

**Example 9**

An unmodified conjugated diene-based polymer was prepared by performing the same method as in Example 7 except for transporting the polymerization reactant from the first reactor to the second reactor, when the polymerization conversion ratio in the first reactor reached 70%, in Example 7.

**Example 10**

An unmodified conjugated diene-based polymer was prepared by performing the same method as in Example 7 except for transporting the polymerization reactant to the second reactor, when the polymerization conversion ratio in the first reactor reached 80%, in Example 7.

**Example 11**

An unmodified conjugated diene-based polymer was prepared by performing the same method as in Example 7 except for maintaining the internal temperature of the first reactor to 70°C, transporting the polymerization reactant from the first reactor to the second reactor, when the polymerization conversion ratio in the first reactor reached 76%, and not injecting to the second reactor, a monomer solution in which 60 wt% of 1,3-butadiene was dissolved in n-hexane, in Example 7.

**Comparative Example 6**

An unmodified conjugated diene-based polymer was prepared by performing the same method as in Example 7 except for transporting the polymerization reactant from the first reactor to the second reactor, when the polymerization conversion ratio in the first reactor reached 74%, and not injecting to the second reactor, 1,3-butadiene and a polar additive, in Example 7.

**Comparative Example 7**

An unmodified conjugated diene-based polymer was prepared by performing the same method as in Example 7 except for injecting to the first reactor, a monomer solution in which 60 wt% of 1,3-butadiene was dissolved in n-hexane in a flow rate of 1.08 kg/hr, and a monomer solution in which 60 wt% of styrene was dissolved in n-hexane in a flow rate of 0.35 kg/hr, transporting the polymerization reactant to the second reactor, when the polymerization conversion ratio in the first reactor reached 64%, and not injecting to the second reactor, 1,3-butadiene, in Example 7.

**Comparative Example 8**

An unmodified conjugated diene-based polymer was prepared by performing the same method as in Example 7 except for transporting the polymerization reactant to the second reactor, when the polymerization conversion ratio in the first reactor reached 55%, in Example 7.

**Comparative Example 9**

An unmodified conjugated diene-based polymer was prepared by performing the same method as in Example 7 except for injecting to the first reactor, a monomer solution in which 60 wt% of 1,3-butadiene was dissolved in n-hexane in a flow rate of 1.13 kg/hr, and a monomer solution in which 60 wt% of styrene was dissolved in n-hexane in a flow rate of 0.28 kg/hr, a polar additive solution in which 2 wt% of ditetrahydrofurylpropane was dissolved in n-hexane in a flow rate of 4.00 g/hr, transporting the polymerization reactant to the second reactor, when the polymerization conversion ratio in the first reactor reached 76%, and not performing a step of injecting to the third reactor, soybean oil and mixing, in Example 7.

**Experimental Example 3. Evaluation of properties of polymers**

With respect to each of the unmodified conjugated diene-based polymers prepared in the Examples and Comparative Examples, the styrene unit content and vinyl content in each polymer, a weight average molecular weight (Mw, x$10^3$ g/mol), a number average molecular weight (Mn, x$10^3$ g/mol), molecular weight distribution (PDI, MWD), and the full width at half maximum of a tan δ peak were measured by the same method as in Experimental Example 1 of Experimental data I. The results are shown in Table 5 below.

[Table 5]

| Division | | Example | | | | | Comparative Example | | | |
|---|---|---|---|---|---|---|---|---|---|---|
| | | 7 | 8 | 9 | 10 | 11 | 6 | 7 | 8 | 9 |
| NMR (wt% ) | SM | 17 | 20 | 17 | 15 | 17 | 17 | 20 | 17 | 15 |
| | Vinyl | 13 | 13 | 13 | 25 | 13 | 13 | 13 | 13 | 25 |
| GPC | Mn (x$10^3$ g/mol) | 486 | 499 | 485 | 496 | 484 | 473 | 486 | 467 | 497 |
| | Mw (x$10^3$ g/mol) | 870 | 923 | 848 | 877 | 865 | 856 | 890 | 840 | 880 |
| | PDI | 1.79 | 1.85 | 1.75 | 1.77 | 1.79 | 1.81 | 1.83 | 1.80 | 1.77 |
| FWHM of tan δ peak (°C) | | 36 | 37 | 30 | 32 | 33 | 17 | 15 | 15 | 17 |

Referring to Table 5 above, it could be confirmed that all the polymers prepared by the preparation method according to the present invention showed the full width at half maximum values of a tan δ peak of 20°C or higher, but all the Comparative Examples which did not follow the preparation method according to the present invention showed the values of less than 20°C.

Through this, it could be found that the fine control of the microstructure of the polymer was possible, and the full width at half maximum value of a tan δ peak was increased according to the preparation method of the present invention.

**Experimental Example 4. Evaluation of properties of rubber molded articles**

In order to compare and analyze the physical properties of a rubber composition including each of the unmodified conjugated diene-based polymers prepared in the Examples and Comparative Examples, and a molded article manufactured therefrom, the full width at half maximum of a tan δ peak, tensile properties, viscoelasticity properties, abrasion resistance and processability were measured by the same method as in Experimental Example 2 of Experimental data I, and the results are shown in Table 6 below.

Meanwhile, in Table 6 below, the tensile strength, viscoelasticity properties, abrasion resistance and processability of Examples 7 to 11, and Comparative Examples 6 to 9 are indexed based on the measured resultant values of Comparative Example 6, and the higher numerical represents better results.

[Table 6]

| Division | Example | | | | | Comparative Example | | | |
|---|---|---|---|---|---|---|---|---|---|
| | 7 | 8 | 9 | 10 | 11 | 6 | 7 | 8 | 9 |
| Tensile strength | 99 | 101 | 98 | 100 | 97 | 100 | 100 | 99 | 105 |

(continued)

| Division | | Example | | | | | Comparative Example | | | |
|---|---|---|---|---|---|---|---|---|---|---|
| | | 7 | 8 | 9 | 10 | 11 | 6 | 7 | 8 | 9 |
| Viscoelas ticity propertie s | tan δ at 0°C | 110 | 109 | 111 | 109 | 109 | 100 | 99 | 100 | 99 |
| | tan δ at 60°C | 99 | 98 | 100 | 99 | 101 | 100 | 101 | 99 | 101 |
| Abrasion resistance | | 111 | 110 | 115 | 113 | 111 | 100 | 98 | 101 | 88 |
| Processability | | 100 | 98 | 102 | 98 | 99 | 100 | 98 | 101 | 90 |

Referring to Table 6, in the cases of the rubber specimens including the polymers of Example 7 to Example 11, satisfying the full width at half maximum values of tan δ according to the present invention, it could be confirmed that tensile strength, processability and running resistance were maintained to the equal levels and at the same time, wet skid resistance and abrasion resistance were markedly improved when compared to Comparative Example 6.

On the contrary, in the cases of the rubber specimens including the polymers of Comparative Example 7 and Comparative Example 8, it could be confirmed that wet skid resistance and running resistance were markedly degraded in contrast to the Examples. In addition, it could be confirmed that the rubber specimen including the polymer of Comparative Example 9, which did not include a vegetable oil, wet skid resistance and abrasion resistance were largely degraded, and processability was markedly degraded in contrast to the Examples.

From the results, it was confirmed that the oil-extended modified conjugated diene-based polymer of the present invention controls the full width at half maximum value of tan δ through the control of a microstructure, and shows excellent tensile properties, running resistance and processability in a balanced way, and at the same time markedly improved effects of wet skid resistance and abrasion resistance through the inclusion of a vegetable oil.

## Claims

1. An oil-extended conjugated diene-based polymer comprising:

   a polymer unit comprising a repeating unit derived from a conjugated diene-based monomer; and
   a vegetable oil,
   wherein, in a tan δ peak graph in accordance with temperature, derived from dynamic viscoelasticity analysis by an Advanced Rheometric Expansion System (ARES), a full width at half maximum (FWHM) value of a tan δ peak shown in a temperature range of -100°C to 100°C is 20°C or higher, and
   the Advanced Rheometric Expansion System is measured using a dynamic mechanical analyzer with a torsional mode under conditions of a frequency of 10 Hz, a strain of 0.5%, and a temperature rise rate of 5°C/min.

2. The oil-extended conjugated diene-based polymer of claim 1, wherein the full width at half maximum value of a tan δ peak is 30°C to 80°C.

3. The oil-extended conjugated diene-based polymer of claim 1, wherein the full width at half maximum value of a tan δ peak is 35°C to 60°C.

4. The oil-extended conjugated diene-based polymer of claim 1, wherein the vegetable oil is one or more selected from the group consisting of soybean oil, rapeseed oil, canola oil, sunflower oil, linseed oil, rice bran oil, palm oil, olive oil, peanut oil, oil palm oil, cottonseed oil, and coconut oil.

5. The oil-extended conjugated diene-based polymer of claim 1, wherein the vegetable oil is comprised in 10 parts by weight to 60 parts by weight based on 100 parts by weight of the polymer unit.

6. The oil-extended conjugated diene-based polymer of claim 1, wherein the tan δ peak is shown in a temperature range of -80°C to 20°C.

7. The oil-extended conjugated diene-based polymer of claim 1, wherein the polymer unit further comprises a repeating unit derived from an aromatic vinyl-based monomer.

**8.** An oil-extended modified conjugated diene-based polymer comprising:

a modified polymer unit comprising a repeating unit derived from a conjugated diene-based monomer, and a functional group derived from a modifier; and
a vegetable oil,
wherein, in a tan δ graph in accordance with temperature, derived from dynamic viscoelasticity analysis by an Advanced Rheometric Expansion System (ARES), a full width at half maximum (FWHM) value of a tan δ peak shown in a temperature range of -100°C to 100°C is 20°C or higher, and
the Advanced Rheometric Expansion System is measured using a dynamic mechanical analyzer with a torsional mode under conditions of a frequency of 10 Hz, a strain of 0.5%, and a temperature rise rate of 5°C/min.

**9.** The oil-extended modified conjugated diene-based polymer of claim 8, wherein

the modifier is an alkoxysilane-based modifier, and
the modified conjugated diene-based polymer has the Si and N contents of 50 ppm or more each, based on a total weight of the polymer.

**10.** A rubber composition comprising a polymer and a filler,
wherein the polymer is the oil-extended conjugated diene-based polymer according to claim 1 or the oil-extended modified conjugated diene-based polymer according to claim 8.

**11.** The rubber composition of claim 9, wherein the filler is comprised in 0.1 parts by weight to 200 parts by weight based on 100 parts by weight of the polymer.

**12.** A rubber composition comprising a conjugated diene-based polymer and a filler,

wherein, in a tan δ graph in accordance with temperature, derived from dynamic viscoelasticity analysis by an Advanced Rheometric Expansion System (ARES), a full width at half maximum (FWHM) value of a tan δ peak shown in a temperature range of -100°C to 100°C is 31°C or higher,
the Advanced Rheometric Expansion System is measured using a dynamic mechanical analyzer with a torsional mode under conditions of a frequency of 10 Hz, a strain of 0.5%, and a temperature rise rate of 5°C/min, and
the conjugated diene-based polymer comprises a vegetable oil.

**13.** The rubber composition of claim 12, wherein the conjugated diene-based polymer is an unmodified oil-extended conjugated diene-based polymer.

**14.** The rubber composition of claim 12, wherein the conjugated diene-based polymer is an oil-extended modified conjugated diene-based polymer comprising a functional group derived from a modifier.

[FIG. 1]

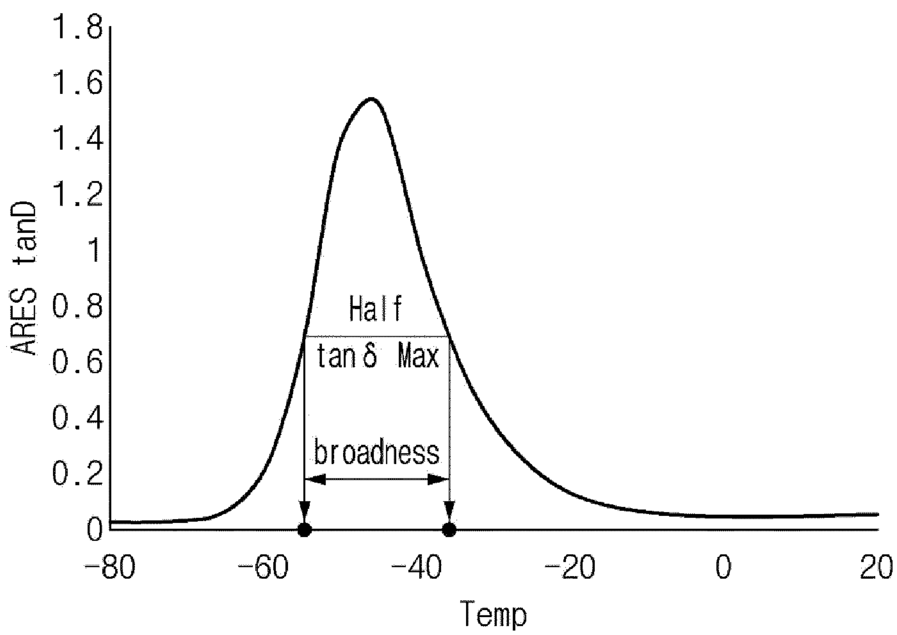
1.8
1.6
1.4
1.2
1
0.8
0.6
0.4
0.2
0
ARES tanD
Half
tanδ Max
broadness
-80
-60
-40
-20
0
20
Temp

**INTERNATIONAL SEARCH REPORT**

International application No. **PCT/KR2021/015618**

**A. CLASSIFICATION OF SUBJECT MATTER**

**C08F 36/04**(2006.01)i; **C08F 236/10**(2006.01)i; **C08F 8/42**(2006.01)i; **C08F 8/32**(2006.01)i; **C08L 9/06**(2006.01)i; **C08L 15/00**(2006.01)i

According to International Patent Classification (IPC) or to both national classification and IPC

**B. FIELDS SEARCHED**

Minimum documentation searched (classification system followed by classification symbols)

C08F 36/04(2006.01); B60C 1/00(2006.01); C08F 212/02(2006.01); C08F 236/00(2006.01); C08F 236/04(2006.01); C08F 8/04(2006.01); C08F 8/46(2006.01); C08K 3/36(2006.01); C08L 21/00(2006.01); C08L 25/10(2006.01); C08L 33/20(2006.01); C08L 51/04(2006.01); C08L 9/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 공액디엔계 중합체(conjugated diene polymer), 식물유(vegetable oil), 변성제(modifying agent), 알콕시실란(alkoxysilane), tan δ, 반치전폭(Full width at half maximum, FWHM), 충전제(filler), 고무 조성물(rubber composition)

**C. DOCUMENTS CONSIDERED TO BE RELEVANT**

| Category* | Citation of document, with indication, where appropriate, of the relevant passages | Relevant to claim No. |
|---|---|---|
| Y | WO 2019-141667 A1 (APOLLO TYRES GLOBAL R&D B.V.) 25 July 2019 (2019-07-25)<br>See page 1, lines 1-5; page 6, lines 9-12; page 7, lines 1-18; page 10, lines 1-10; example 3; and figure 3. | 1-14 |
| Y | KR 10-2020-0021129 A (HANKOOK TIRE & TECHNOLOGY CO., LTD.) 28 February 2020 (2020-02-28)<br>See claims 1-3. | 1-14 |
| Y | KR 10-2019-0066566 A (LG CHEM, LTD.) 13 June 2019 (2019-06-13)<br>See claims 1 and 6. | 9 |
| A | JP 2014-088544 A (SUMITOMO RUBBER IND. LTD.) 15 May 2014 (2014-05-15)<br>See paragraphs [0048]-[0055]; and claims 1-11. | 1-14 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 February 2022** | **08 February 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT

International application No.
PCT/KR2021/015618

C. DOCUMENTS CONSIDERED TO BE RELEVANT

| Category* | Citation of document, with indication, where appropriate, of the relevant passages | Relevant to claim No. |
|---|---|---|
| A | KR 10-2020-0089224 A (ASAHI KASEI KABUSHIKI KAISHA) 24 July 2020 (2020-07-24) See claims 1, 2 and 8; and figure 2. | 1-14 |
| A | JP 2018-178103 A (SUMITOMO RUBBER IND. LTD.) 15 November 2018 (2018-11-15) See claims 1-3; and figure 1. | 1-14 |
| A | WO 2019-230527 A1 (KURARAY CO., LTD. et al.) 05 December 2019 (2019-12-05) See entire document. | 1-14 |

Form PCT/ISA/210 (second sheet) (July 2019)

**INTERNATIONAL SEARCH REPORT**
**Information on patent family members**

International application No.
**PCT/KR2021/015618**

| Patent document cited in search report | Publication date (day/month/year) | Patent family member(s) | Publication date (day/month/year) |
|---|---|---|---|
| WO 2019-141667 A1 | 25 July 2019 | None | |
| KR 10-2020-0021129 A | 28 February 2020 | None | |
| KR 10-2019-0066566 A | 13 June 2019 | CN 110121514 A | 13 August 2019 |
| | | EP 3536720 A1 | 11 September 2019 |
| | | EP 3536720 B1 | 05 January 2022 |
| | | JP 2020-512469 A | 23 April 2020 |
| | | JP 6918134 B2 | 11 August 2021 |
| | | KR 10-2167122 B1 | 16 October 2020 |
| | | US 11130832 B2 | 28 September 2021 |
| | | US 2020-0115485 A1 | 16 April 2020 |
| | | WO 2019-112260 A1 | 13 June 2019 |
| JP 2014-088544 A | 15 May 2014 | CN 103709327 A | 09 April 2014 |
| | | CN 103709327 B | 15 May 2018 |
| | | EP 2716667 A1 | 09 April 2014 |
| | | EP 2716667 B1 | 09 November 2016 |
| | | JP 5952788 B2 | 13 July 2016 |
| | | US 2014-0100316 A1 | 10 April 2014 |
| | | US 2014-0200321 A1 | 17 July 2014 |
| | | US 8912301 B2 | 16 December 2014 |
| | | US 8940848 B2 | 27 January 2015 |
| KR 10-2020-0089224 A | 24 July 2020 | CN 111440410 A | 24 July 2020 |
| | | JP 2020-111722 A | 27 July 2020 |
| JP 2018-178103 A | 15 November 2018 | EP 3385320 A2 | 10 October 2018 |
| | | EP 3385320 A3 | 17 October 2018 |
| | | EP 3385320 B1 | 20 November 2019 |
| | | US 10494513 B2 | 03 December 2019 |
| | | US 2018-0291188 A1 | 11 October 2018 |
| WO 2019-230527 A1 | 05 December 2019 | CA 3101774 A1 | 05 December 2019 |
| | | CN 112154160 A | 29 December 2020 |
| | | EP 3805275 A1 | 14 April 2021 |
| | | KR 10-2021-0016364 A | 15 February 2021 |
| | | TW 202003674 A | 16 January 2020 |
| | | US 2021-0324130 A1 | 21 October 2021 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020200153156
- KR 1020210093678
- US 4397994 A